# EUROPÄISCHE PATENTSCHRIFT

(11) **EP 0 767 234 B1**
(45) Veröffentlichungstag und Bekanntmachung des Hinweises auf die Patenterteilung: **19.12.2001**
(21) Anmeldenummer: 96114999.4
(22) Anmeldetag: 19.09.1996
(51) Int. Cl.: C09K 11/06, H05B 33/14, C08F 30/08

(54) **(Co)Polymerisate auf Basis von Vinyl-Einheiten und ihre Verwendung in elektrolumineszierenden Anordnungen**
(Co)polymers based on vinyl monomers and their use in electroluminescent devices
(Co)polymères à base vinylique et leur usage dans dispositifs électroluminescents

(30) Priorität: 02.10.1995 DE 19536843
(43) Veröffentlichungstag der Anmeldung: 09.04.1997
(73) Patentinhaber: BAYER AG, 51368 Leverkusen (DE)
(72) Erfinder: Chen, Yun, Dr., 47800 Krefeld (DE); Wehrmann, Rolf, Dr., 47800 Krefeld (DE); Elschner, Andreas, Dr., 45479 Mülheim (DE); Dujardin, Ralf, Dr., 47877 Willich (DE)

(56) Entgegenhaltungen:
- EP-A- 0 728 775
- MACROMOLECULES, Bd. 28, Nr. 1, 2.Januar 1995, Seiten 386-389, XP000486294 BISBERG J ET AL: "EXCIMER EMISSION AND WAVELENGTH CONTROL FROM LIGHT-EMITTING DIODES BASED ON SIDE-CHAIN POLYMERS"

## Beschreibung

Bei der Entwicklung lichtemittierender Bauteile für Elektronik oder Photonik kommen heute hauptsächlich anorganische Halbleiter, wie Galliumarsenid, zum Einsatz. Auf Basis derartiger Substanzen können punktförmige Anzeigeelemente hergestellt werden. Großflächige Anordnungen sind nicht möglich.

Neben den Halbleiterleuchtdioden sind elektrolumineszierende Anordnungen auf Basis aufgedampfter niedermolekularer organischer Verbindungen bekannt. (US-P 4 539 507, US-P 4 769 262, US-P 5 077 142, EP-A 406 762). Auch mit diesen Materialien können - bedingt durch das Herstellverfahren - nur kleindimensionierte LEDs hergestellt werden. Außerdem besitzen diese elektrolumineszierenden Anordnungen einen hohen Herstellungsaufwand und eine nur sehr geringe Betriebsdauer.

Polymere, wie Poly-(p-phenylene) und Poly-(p-phenylenvinylene), werden als elektrolumineszierend beschrieben: Adv. Mater. 4 (1992) No. 1; J. Chem. Soc., Chem. Commun. 1992, S. 32-34; Polymer, 1990, Vol. 31, 1137; Physical Review B, Vol. 42, No. 18, 11670 oder WO 90/13148.

Im Gegensatz zu den durchkonjugierten Polymeren werden auch nichtdurchkonjugierte Polykondensate mit lumineszierenden Struktureinheiten in elektrolumineszierenden Anordnungen beschrieben (Macromol. Chem. Phys. 195, 2023-2037 (1994).

Die vorliegende Erfindung stellt zum Aufbau elektrolumineszierender Anordnungen Polymere auf einer wohl bekannten Basisstruktur wie Polystyrol und Polyacrylat mit kovalent gebundenen Luminophoreinheiten in den Seitenketten bereit. Im Hinblick auf eine Verwendung als elektrolumineszierende Materialien sind derartige Polymere aufgrund ihrer einfachen Herstellungsverfahren und guten Verarbeitbarkeit von technologischem Interesse. Elektrolumineszierende Anordnungen, die diese (Co)Polymere enthalten, zeichnen sich durch hohe Leuchtintensitäten und eine breite Vielfalt an Farbtönen aus. Die Vorteile der erfindungsgemäßen (Co)Polymerisate liegen z.B. darin, daß sich
1. die Leuchtintensitäten durch Variation der Luminophorkonzentration gezielt verändern lassen,
2. die Farbtöne durch Kombination verschiedener luminopherhaltiger Monomere einstellen lassen,
3. die Morphologie und elektrischen Eigenschaften der Polymerschichten durch Einführung geeigneter Seitenkettenbausteine optimieren lassen.

Die vorliegende Erfindung betrifft (Co)Polymerisate, die mindestens einen wiederkehrenden Kettenbaustein der allgemeinen Formel (1) oder (2) enthalten und gegebenenfalls wiederkehrende Einheiten der allgemeinen Formel (3) enthalten 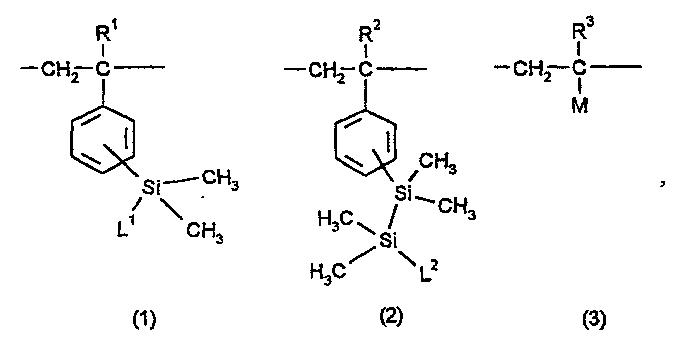 worin
- R¹, R² und R³: unabhängig voneinander Wasserstoff oder C₁-C₆-Alkyl bedeuten,
- M: für CN oder C₁-C₃₀-Alkoxycarbonyl, C₁-C₃₀-(Di)Alkylaminocarbonyl, C₁-C₃₀-Alkylcarbonyl steht, die jeweils durch Hydroxy oder C₁-C₆-Alkoxycarbonyl substituiert sein können, weiterhin für Phenyl, Naphthyl, Anthracenyl, Pyridyl oder Carbazolyl steht, die jeweils durch Reste aus der Gruppe Halogen, Hydroxy, Silyl, C₁-C₃₀-Alkyl, C₆-C₁₈-Aryl, C₁-C₃₀-Alkoxy, C₁-C₃₀-Alkoxycarbonyl, C₁-C₃₀-Acyloxy und C₁-C₃₀-Alkylcarbonyl substituiert sein können,
wobei der Anteil der Struktureinheiten der Formel (3) 0 bis 99,5, vorzugsweise 40 bis 99,5 Mol-% und der Anteil an Struktureinheiten (1) und/oder (2) jeweils 0,5 bis 100, vorzugsweise 0,5 bis 60 Mol-% beträgt und sich die Molanteile zu 100 % ergänzen, und L¹ und L² unabhängig voneinander für einen photolumineszierenden Rest, der auf dem Gerüst eines Fluoreszenzfarbstoffs basiert, der ausgewählt ist aus der Gruppe der Cumarine der Formel (4) 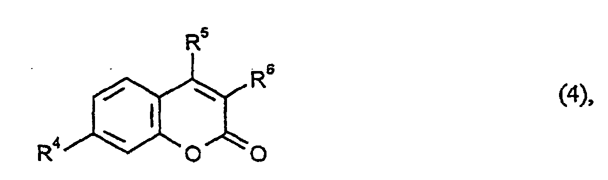 Pyrene der Formel (5) 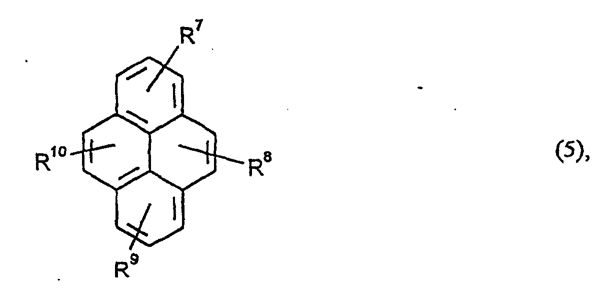 1,8-Naphthalimide der Formel (6) 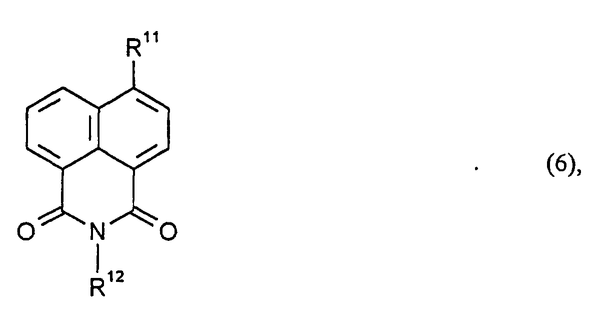 1,8-Naphthaloylen-1',2'-benzimidazole der Formel (7a) und (7b) 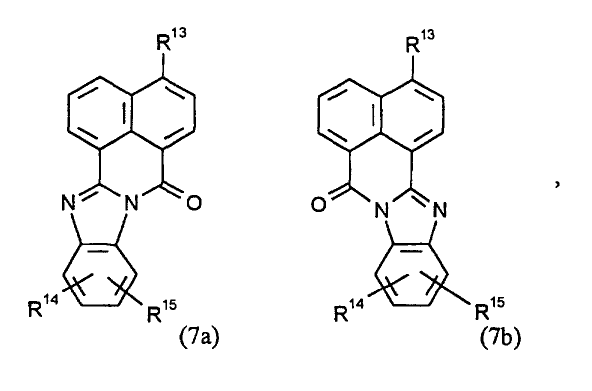 Phenothiazine oder Phenoxazine der Formel (8) 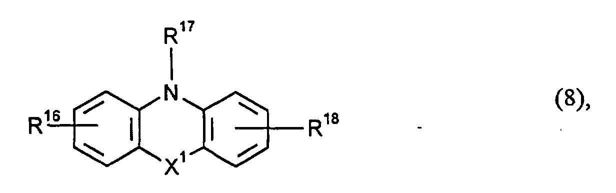 mit X¹ = 0 oder S,
Benzopyrone der Formel (9) 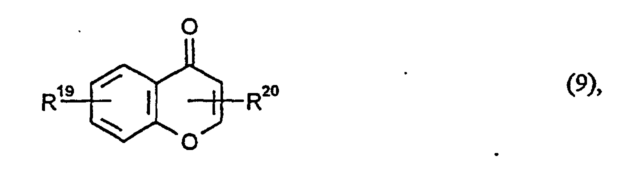 Carbazole, Fluorene, Dibenzothiophene und -furane der Formel (10) 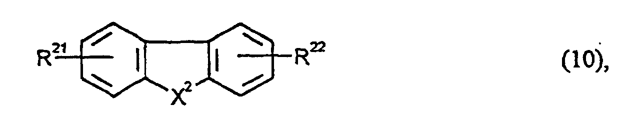 mit X² = NR²³, CH₂, S oder O, wobei R²³ für Wasserstoff oder C₁-C₆-Alkyl, vorzugsweise Wasserstoff oder C₁-C₄-Alkyl, steht,
Oxazole, 1,3,4-Oxadiazole der Formel (11) 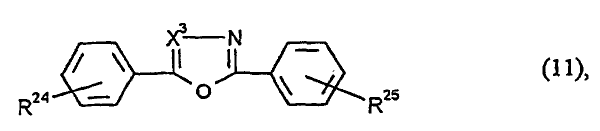 mit X³ = CH oder N
Benzochinoline der Formel (12) 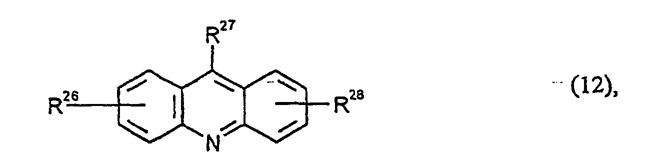 9,10-Bis-(Phenylethinyl)-Anthracene der Formel (13) 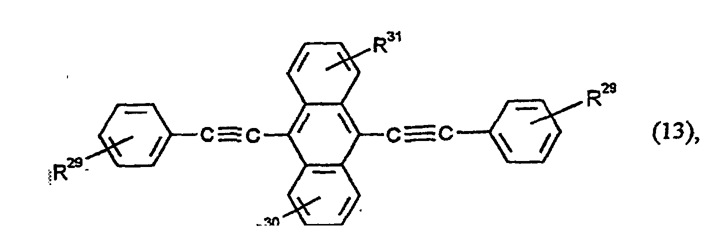 Fluorone der Formel (14) 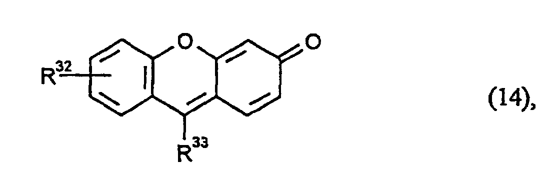 9,10-Diphenylanthracen der Formel (15) 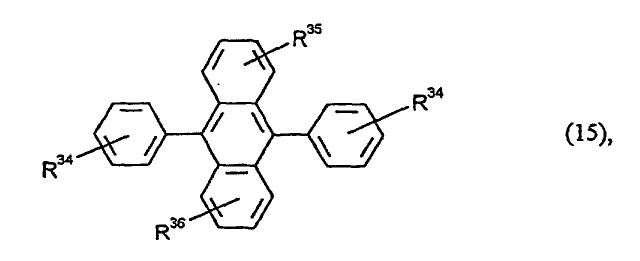 2-Styrylbenzazol der Formel (16) 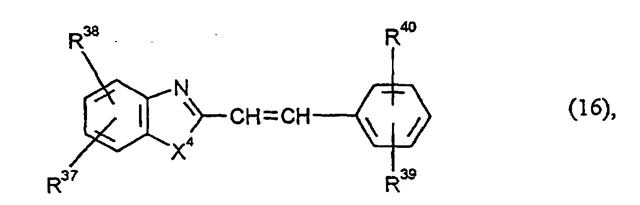 mit X⁴ = O, S, Se oder CH₂,
wobei,
- R⁴: für Wasserstoff, C₁-C₃₀-Alkyl, C₆-C₁₈-Aryl, C₇-C₃₄-Aralkyl oder C₁-C₃₀-Alkoxy oder für 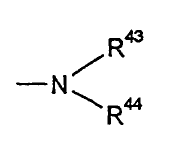 steht, wobei
R⁴³ und R⁴⁴ unabhängig voneinander für Wasserstoff, C₁-C₃₀-Alkyl, C₆-C₁₈-Aryl, C₇-C₂₄-Aralkyl steht, die jeweils durch Hydroxy oder C₁-C₄-Alkoxycarbonyl substituiert sein können, oder
R⁴³ und R⁴⁴ gemeinsam mit dem Stickstoff-Atom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können,
- R⁵: für Wasserstoff, Cyano, C₁-C₃₀-Alkyl, C₆-C₁₈-Aryl, C₇-C₃₄-Aralkyl, C₁-C₃₀-Alkoxy, C₂-C₁₂-Acyl, C₁-C₁₂-Alkoxycarbonyl, C₁-C₁₂-(Di)-Alkylaminocarbonyl steht,
- R⁶: für Wasserstoff, Cyano, C₁-C₃₀-Alkyl, C₆-C₁₈-Aryl, C₇-C₃₄-Aralkyl, C₁-C₃₀-Alkoxy oder für 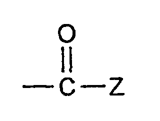 steht, wobei Z für eine Gruppe OR⁴⁵ oder 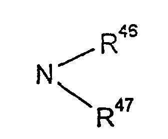 steht und
R⁴⁵, R⁴⁶ und R⁴⁷ unabhängig voneinander für C₁-C₃₀-Alkyl, C₆-C₁₈-Aryl oder C₇-C₂₄-Aralkyl stehen, wobei die aromatischen Ringe zusätzlich noch durch Halogen, C₁-C₆-Alkyl, C₁-C₆-Alkoxy substituiert sein können,
- R⁷, R⁸ und R⁹: unabhängig voneinander Wasserstoff, C₁-C₃₀-Alkyl, C₆-C₁₈-Aryl, C₇-C₂₄-Aralkyl, C₁-C₃₀-Alkoxy, Cyano, C₂-C₁₂-Alkoxycarbonyl, C₁-C₁₂-(Di)Alkylaminocarbonyl oder eine Aminogruppe mit einer oder zwei C₁-C₆-Alkylgruppen bedeuten,
- R¹⁰: für Wasserstoff, Cyano, C₁-C₃₀-Alkyl, C₆-C₁₈-Aryl, C₇-C₃₄-Aralkyl, C₁-C₃₀-Alkoxy, Amino, eine Aminogruppe mit einer oder zwei C₁-C₆-Alkylgruppen, C₂-C₁₂-Acyl, C₁-C₁₂-Alkoxycarbonyl, C₁-C₁₂-(Di)-Alkylaminocarbonyl bedeutet,
- R¹¹: für Wasserstoff, Halogen, Nitro, C₁-C₄-Alkoxycarbonyl, C₁-C₄-Acyl, C₈-C₂₄-Aralkenyl, unsubstituiertes Amino oder für ein- oder zweifach, gleich oder verschieden durch C₁-C₃₀-Aryl, C₆-C₁₈-Aryl oder C₇-C₂₄-Arallyl substituiertes Amino steht,
- R¹¹: weiterhin für Morpholinyl, Piperidinyl, Pyrrolidinyl oder Piperazinyl steht, die einen oder zwei Substituenten ausgewählt aus Methyl, Ethyl und/oder Phenyl tragen können,
- R¹²: für Wasserstoff, C₁-C₃₀-Alkyl, C₆-C₁₈-Aryl, C₇-C₂₄-Aralkyl oder C₁-C₃₀-Alkoxy steht,
- R¹³: für Wasserstoff, C₁-C₃₀-Alkyl, C₆-C₁₈-Aryl, C₇-C₃₄-Aralkyl, C₁-C₃₀-Alkoxy oder 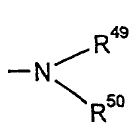 steht, wobei
R⁴⁹ und R⁵⁰ unabhängig voneinander für C₁-C₃₀-Alkyl, C₆-C₁₈-Aryl, C₇-C₂₄-Aralkyl stehen oder
R⁴⁹ und R⁵⁰ weiterhin gemeinsam mit dem Stickstoffatom, an das sie gebunden sind, für Morpholinyl, Piperidinyl, Pyrrolidinyl oder Piperazinyl stehen, die einen oder zwei gleich oder verschiedene Substituenten ausgewählt aus Methyl, Ethyl und Phenyl tragen können,
- R¹⁴ und R¹⁵: unabhängig voneinander Wasserstoff, Cyano, Halogen, Nitro, C₁-C₃₀-Alkyl, C₁-C₃₀-Alkoxy, C₆-C₁₈-Aryl oder C₇-C₂₄-Aralkyl, C₁-C₁₂-Alkoxycarbonyl, C₂-C₁₂-Acyl, C₁-C₁₂-(Di)Alkylaminocarbonyl, C₁-C₆-(Di)Alkylamino bedeuten,
- R¹⁷ und R²³: Wasserstoff, C₁-C₃₀-Alkyl, C₆-C₁₈-Aryl oder C₇-C₂₄-Aralkyl bedeuten und
- R¹⁶, R¹⁸ bis R²² und R²⁴ bis R⁴⁰: unabhängig voneinander Wasserstoff, Cyano, C₁-C₃₀-Alkyl, C₆-C₁₈-Aryl, C₇-C₂₄-Aralkyl, C₁-C₃₀-Alkoxy, eine Aminogruppe mit einer oder zwei C₁-C₆-Alkylgruppen, unsubstituiertes Amino, C₂-C₁₂-Acyl, C₁-C₁₂-Alkoxycarbonyl oder C₁-C₁₂-(Di)Alkylaminocarbonyl bedeuten, wobei die aliphatischen Kohlenstoffketten, wie z.B. Alkyl, Alkoxy, Alkylamino, Aralkyl, in den Resten von R⁴ bis R¹³, R¹⁶ bis R⁴⁰ durch eines oder mehrere, vorzugsweise ein oder zwei Heteroatome ausgewählt aus Sauerstoff, Stickstoff und Schwefel und/oder durch einen oder mehrere, vorzugsweise ein oder zwei Phenylenringe, die durch C₁-C₄-Alkyl und/oder Halogen substituiert sein können, unterbrochen sein können,
und wobei weiterhin die Anknüpfung des Luminophors an die Polymerseitenketten über ein Sauerstoff einer Hydroxy- gruppe an den obengenannten Substituenten erfolgt.

In den obengenannten Formeln bedeuten R¹, R² und R³ unabhängig voneinander vorzugsweise Wasserstoff, Methyl oder Ethyl.

M steht vorzugsweise für CN oder C₁-C₁₅-Alkoxycarbonyl, C₁-C₁₅-(Di)Alkyl-aminocarbonyl, C₁-C₁₅-Alkylcarbonyl, die jeweils durch Hydroxy oder Methoxycarbonyl, Ethoxycarbonyl, n- oder iso-Propoxycarbonyl substituiert sein können, weiterhin für Phenyl, Naphthyl, Anthracenyl, Pyridyl oder Carbazolyl, die jeweils durch Reste aus der Gruppe Chlor, Brom, Hydroxy, Silyl, C₁-C₆-Alkyl, C₁-C₆-Alkoxy, C₁-C₆-Alkoxycarbonyl, C₁-C₆-Acyloxy und C₁-C₆-Alkylcarbonyl, gegebenenfalls durch Methyl, Ethyl, n- oder iso-Propyl substituiertes Phenyl, substituiert sein können.

In den o.g. Resten R⁴ bis R⁴⁰ trägt pro Fluoreszenzfarbstoff mindestens eine aliphatische, aromatische oder heterocyclische Kohlenstoffkette wenigstens eine Hydroxy-Gruppe, über die die kovalente Bindung an das Monomere hergestellt wird durch Reaktion dieser Gruppen mit einer am Monomer befindlichen reaktiven Gruppe (z.B. Halogen), vgl. Herstellungsverfahren. Im Falle des Monomers (1) ist diese Anknüpfungsstelle die Methylengruppe am Phenylring (es reagiert -CH₂-Cl). Im Falle des Monomers (2) ist die Anknüpfüngsstelle die Carbonylgruppe (über -CO-Cl).

M steht insbesondere für Phenyl, Naphthyl, Anthracenyl, Pyridyl oder Carbazolyl, die jeweils durch Hydroxy, Silyl, C₁-C₄-Alkyl, gegebenenfalls durch Methyl,

Ethyl, n- oder iso-Propyl substituiertes Phenyl, durch C₁-C₄-Alkoxy, C₁-C₆-Alkoxycarbonyl, C₁-C₆-Acyloxy oder C₁-C₆-Alkylcarbonyl substituiert sein können.

L¹ und L² stehen unabhängig voneinander insbesondere für einen Fluoreszenzfarbstoffrest ausgewählt aus der Gruppe der Cumarine der Formel (4), Pyrene der Formel (5), 1,8-Naphthalimide der Formel (6), 1,8-Naphthaloylen-1',2'-benzimidazole der Formel (7), Phenothiazine oder Phenoxazine der Formel (8), Carbazole und Fluorene der Formel (10).

Die vorliegende Erfindung betrifft weiterhin ein Verfahren zur Herstellung von obengenannten (Co)Polymerisaten, die mindestens einen wiederkehrenden Kettenbaustein der allgemeinen Formel (1) oder (2) und gegebenenfalls wiederkehrende Einheiten der allgemeinen Formel (3) enthalten, 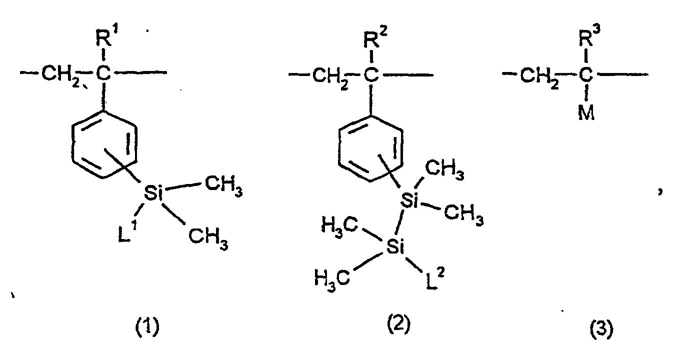 wobei die Reste die obengenannten Bedeutungen haben,
wobei man die entsprechenden Monomere der Formel (20) oder (21) 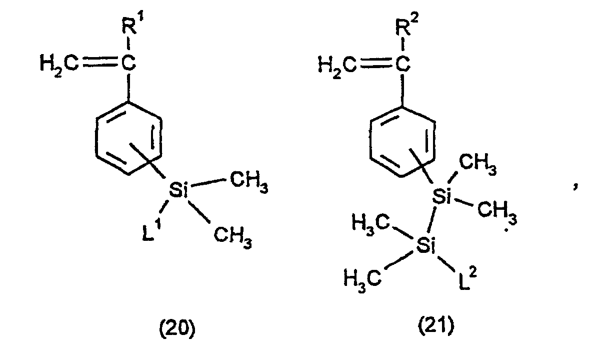 aus einem mit einer OH-, COOH- oder NH-Gruppe funktionalisierten Fluoreszenzfarbstoff, welcher die Struktur von L enthält,
und einem Styrol- oder Acrylsäurederivat der Formel (22) und (23) 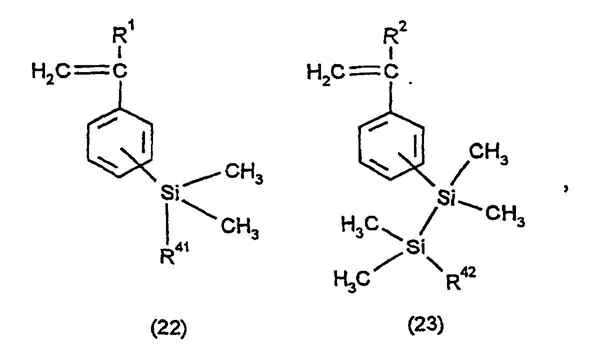 worin
R¹ und R² den obengenannten Bedeutungsumfang haben und
R⁴¹ und R⁴² für ein Halogenatom, vorzugsweise Cl oder Br steht,
in Gegenwart einer Base, vorzugsweise Triethylamin, Pyridin oder ein Alkalimetall-Alkoholat, herstellt und diese dann einer Polymerisation gegebenenfalls in Gegenwart von Comonomeren der Bausteine gemäß Formel (3) unterwirft.

Die Umsetzung der mit OH-Gruppe funktionalisierten Fluoreszenz-Farbstoffen erfolgt im allgemeinen bei Temperaturen von -30°C bis 100°C, vorzugsweise 0°C bis 60°C.

Die Polymerisationsverfahren sind in der Literatur beschrieben. Sie können ionisch oder radikalisch erfolgen. Eine anionische Polymerisation kann z.B. durch Starter wie Butyllithium oder Lithiumnaphthalid ausgelöst werden. Eine radikalische Polymerisation kann z.B. durch Radikalstarter wie z.B. Azoinitiatoren oder Peroxide, vorzugsweise AIBN (Azoisobuttersäuredinitril) oder Dibenzoylperoxid, ausgelöst werden. Die Herstellung der Polymere kann in Substanz oder in geeigneten Lösungsmitteln wie Benzol, Toluol, Tetrahydrofuran, Dioxan, Ethylacetat, Xylol, Chlorbenzol, 1-Methoxy-2-propylacetat, chlorierte Kohlenwasserstoffe, Aceton, etc., bei Temperaturen von 20-250°C erfolgen.

Die Herstellung der erfindungsgemäßen (Co)Polymerisate wird beispielsweise durch das folgende Formelschema dargestellt:

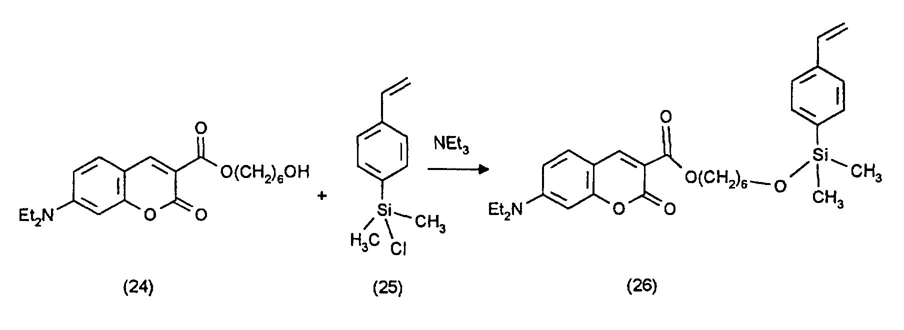

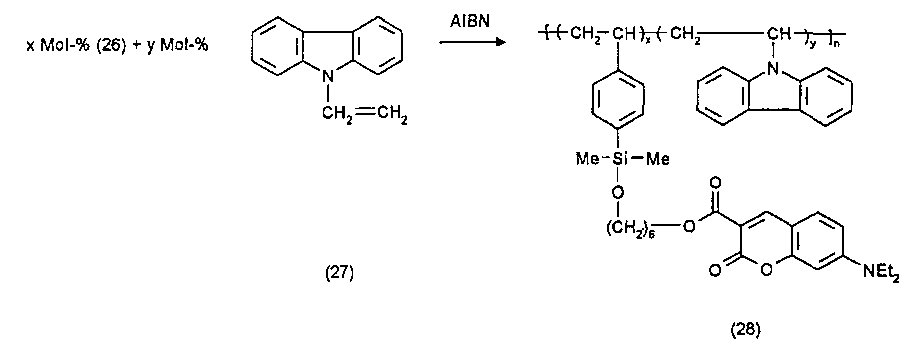

Hierbei wird ausgehend von 3-(6-Hydroxyhexoxycarbonyl)-7-diethylaminocumarin (24) und 4-(Dimethylchlorsilyl)-styrol (25) unter Mitwirkung von Triethylamin bei 0°C bis Raumtemperatur zunächst das Styrolderivat (26) hergestellt. Das Styrolderivat (26) läßt sich in Gegenwart von 9-Vinylcarbazol (27) als Comonomer unter Mitwirkung von AIBN als Radikalstarter in Toluol bei 100°C unter Bildung des Copolymerisats (28) polymerisieren. Der bevorzugte Gewichtsanteil an Comonomer (26) x liegt zwischen 0.5 bis 50 %.

Analog lassen sich beispielsweise ausgehend aus 4/5-(N-Methyl-N-hydroxyethyl)-amino-1,8-naphthoylen-1'-2'-benzimidazol (29) oder N-Isoamyl-4-(N'-methyl-N'-hydroxyethyl)-amino-1,8-naphthalimid (32) die Styrolderivate (30) oder (33), die Polymerisate (31) oder (34) im folgenden Formelschema herstellen:

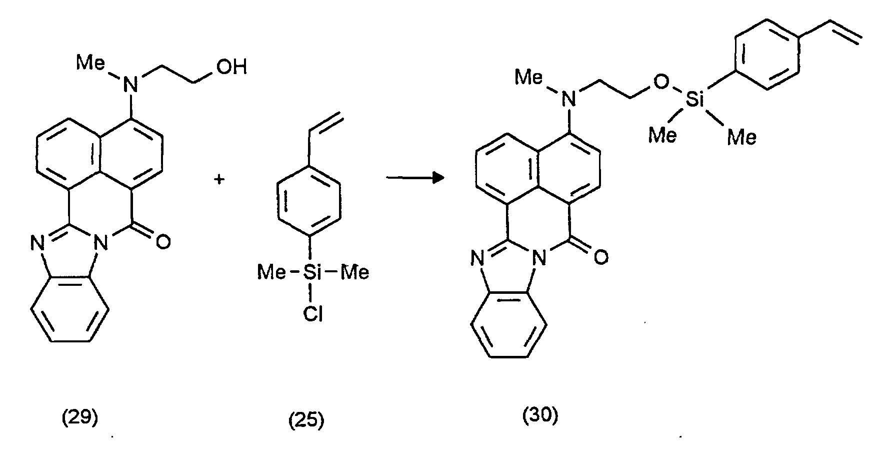

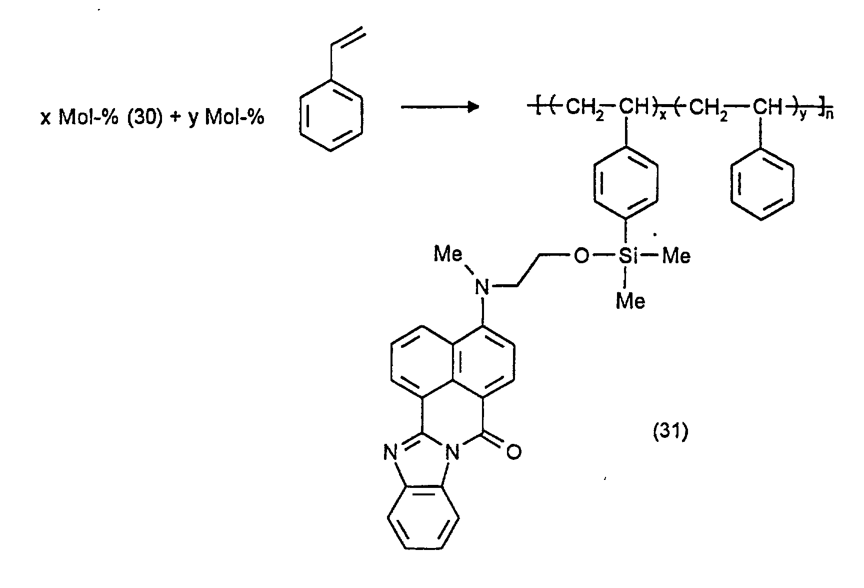

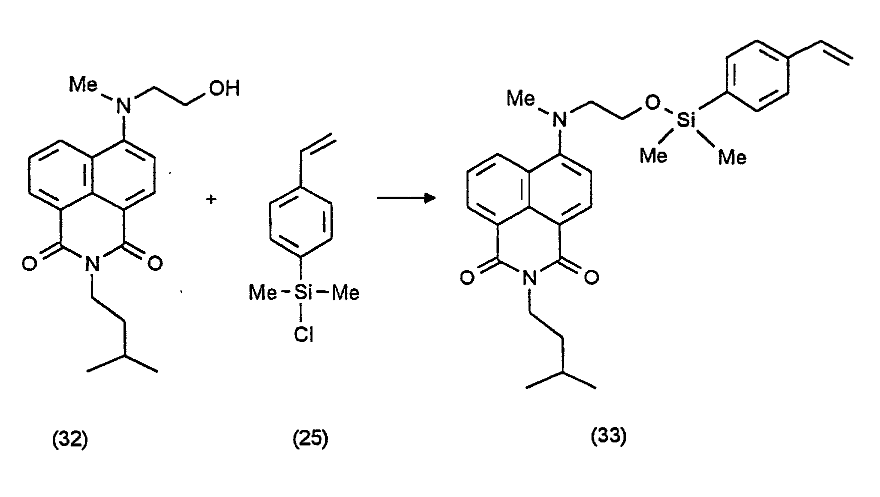

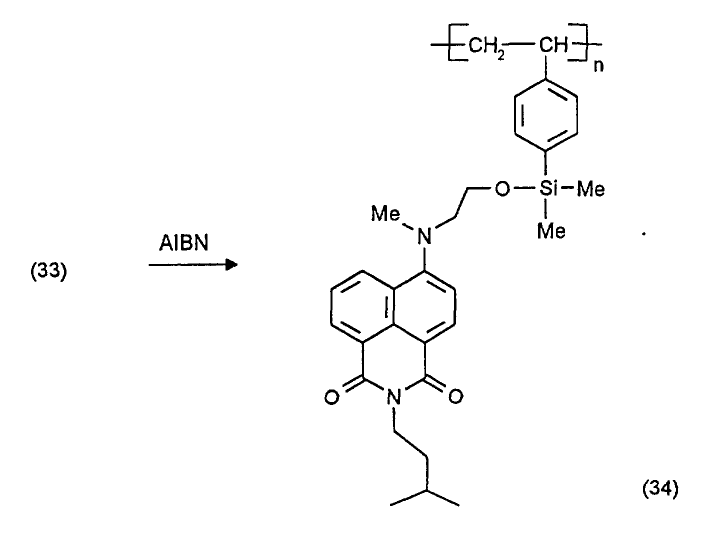

(Co)polymerisate der vorliegenden Erfindung weisen Molekulargewichte im Bereich von 500 bis 1 Million g/mol, vorzugsweise von 800 bis 500 000 g/mol - bestimmt durch Gelpermeationschromatographie - auf.

Die zur Herstellung der erfindungsgemäßen (Co)polymerisate benötigten mit OH funktionalisierten Fluoreszenzfarbstoffe (vergl. Definition des Restes L) sind teilweise bekannt. Die silylsubstituierten Styrolderivate (22) und (23) sind bekannt (A.T. Holohan, et al. Macromol. Chem. Phys. 195, 2965 - 2979 (1994).

Die Cumarinderivate der folgenden Formel (4a) sind neu und Gegenstand einer separaten Anmeldung (DE 1 9505 940.9 vom 21. 02. 95): 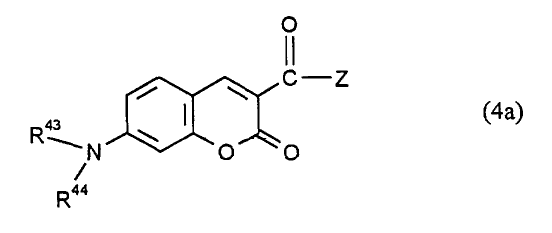 wobei
- R⁴³ und R⁴⁴: unabhängig voneinander für Wasserstoff, C₁-C₃₀-Alkyl, C₆-C₁₈-Aryl, C₇-C₂₄-Aralkyl steht, die jeweils durch Hydroxy oder C₁-C₄-Alkoxycarbonyl substituiert sein können, oder
- R⁴³ und R⁴⁴: gemeinsam mit dem Stickstoff-Atom, an das sie gebunden sind, einen Morpholin-, Piperidin-, Pyrolidin- oder Piperazinring, der einen oder zwei Substituenten aus der Gruppe Methyl, Ethyl und Phenyl tragen kann, bedeuten können, und
- Z: eine Gruppe OR⁴⁵ oder 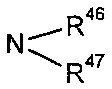 bedeutet, wobei
R⁴⁵ C₁-C₃₀-Alkyl, C₆-C₁₈-Aryl oder C₇-C₂₄-Aralkyl bedeutet, die jeweils durch mindestens eine Hydroxygruppe substituiert sind, und wobei die aromatischen Ringe zusätzlich noch durch Halogen, C₁-C6-Alkyl, C₁-C₆-Alkoxy substituiert sein können und
R⁴⁶ und R⁴⁷ unabhängig voneinander für jeweils gegebenenfalls durch Hydroxy substituiertes C₁-C₃₀-Alkyl, C₆-C₁₈-Aryl oder C₇-C₂₄-Aralkyl stehen, wobei mindestens einer der Reste R⁴⁶ oder R⁴⁷ über eine Hydroxygruppe verfügt und wobei die aromatischen Ringe zusätzlich noch durch Halogen, C₁-C₆-Alkyl, C₁-C₆-Alkoxy substituiert sein können.

Die erfindungsgemäßen Cumarin-Derivate der Formel (4a) tragen mindestens eine Hydroxygruppe über die sie an Polymerseitenketten chemisch gebunden werden können.

In Formel (4a) stehen R⁴³ und R⁴⁴ unabhängig voneinander vorzugsweise für Wasserstoff oder gegebenenfalls durch Hydroxy und/oder C₁-C₄-Alkoxycarbonyl substituiertes C₁-C₁₆-Alkyl, jeweils unsubstituiertes oder durch C₁-C₄-Alkyl, Hydroxy, Amino, Carboxy, C₁-C₄-Alkoxycarbonyl, Chlor und/oder Brom substituiertes Phenyl, Naphthyl, Phenyl-C₁-C₄-alkyl oder Naphthyl-C₁-C₄-alkyl.
- R⁴³ und R⁴⁴: stehen insbesondere für gegebenenfalls durch Hydroxy substituiertes C₁-C₆-Alkyl oder Phenyl,
- Z: steht in der oben genannten Formel (4a) für OR⁴⁵ oder NR⁴⁶R⁴⁷, wobei R⁴⁵ vorzugsweise für C₁-C₁₆-Mkyl, Phenyl, Naphthyl, Phenyl-C₁-C₄-alkyl oder Naphthyl-C₁-C₄-alkyl steht, die jeweils durch mindestens eine Hydroxygruppe substituiert sind, und wobei die aromatischen Ringe zusätzlich noch durch Halogen, C₁-C₆-Alkyl, C₁-C₆-Alkoxy substituiert sein können,
- R⁴⁶ und R⁴⁷: stehen unabhängig voneinander vorzugsweise für jeweils gegebenenfalls durch Hydroxy substituiertes C₁-C₁₆-Alkyl, Phenyl, Naphthyl, Phenyl-C₁-C₄-alkyl oder Naphthyl-C₁-C₄-alkyl steht, wobei mindestens einer der Reste R⁴ oder R⁵ über eine Hydroxygruppe verfügt und die aromatischen Ringe zusätzlich noch durch Halogen, C₁-C₆-Alkyl, C₁-C₆-Alkoxy substituiert sein können.
- R⁴⁵: steht besonders bevorzugt für durch eine Hydroxygruppe substituiertes C₁-C₁₂-Alkyl.
- R⁴⁶ und R⁴⁷: stehen unabhängig voneinander besonders bevorzugt für gegebenenfalls durch eine Hydroxygruppe substituiertes C₁-C₁₂-Alkyl, wobei mindestens einer der Reste R⁴ und R⁵ über eine Hydroxygruppe verfügt.

Die neuen Cumarinderivaten der Formel (4a), 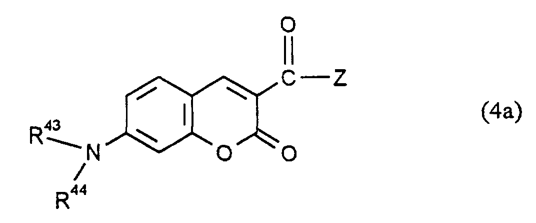 wobei R⁴³, R⁴⁴ und Z die oben genannte Bedeutung haben, lassen sich dadurch herstellen, daß man
a) im Falle, daß Z für -OR⁴⁵ steht, vorzugsweise in einem Eintopfverfahren, aus der Meldrum's-Säure der Formel (I) 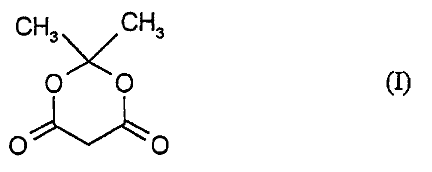 und einem Alkohol der Formel (II)

   R⁴⁵-OH (II)

   gegebenenfalls in Gegenwart eines Verdünnungsmittels wie beispielsweise Toluol, Xylol oder Mesitylen unter Katalyse von beispielsweise p-Toluolsulfonsäure bei Temperaturen im Bereich von 20 bis 250°C, vorzugsweise 80 bis 150°C, das Malonsäure-Derivat der Formel (III) herstellt, 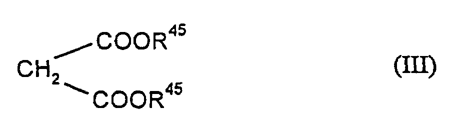 und dieses anschließend mit einem Salicylaldehyd der Formel (IV) 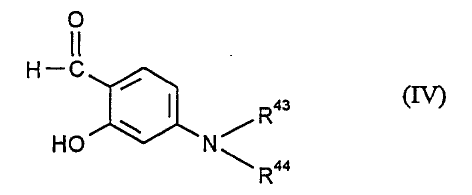 wobei R⁴³, R⁴⁴, R⁴⁵ die o.g. Bedeutung haben,
   gegebenenfalls in Gegenwart eines Verdünnungsmittels wie beispielsweise Toluol, Xylol oder Mesitylen unter Katalyse von beispielsweise Piperidinacetat bei Temperaturen von 50 bis 250°C, vorzugsweise 80 bis 140°C umsetzt, und
b) im Falle, daß Z für 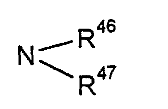 steht, einen Salicylaldehyd der Formel (IV) ein sekundäres Amin der Formel (V) und ein Malonsäure-Derivat der Formel (VI) 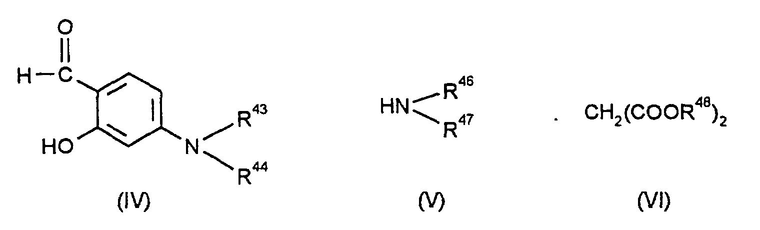 worin
   - R⁴³, R⁴⁴, R⁴⁶ und R⁴⁷: die oben genannte Bedeutung haben und
   - R⁴⁸: für C₁-C₆-Alkyl steht,
   gegebenenfalls in Gegenwart eines Verdünnungsmittels wie beispielsweise Toluol, Xylol oder Mesitylen unter Katalyse von beispielsweise Piperidinacetat bei Temperaturen von 50 bis 250°C, vorzugsweise 80 bis 140°C umsetzt.

Bei der Durchführung des erfindungsgemäßen Verfahrens a) setzt man im allgemeinen auf 1 Mol Meldrum's Säure der Formel (I) 2-10 Mol, vorzugsweise 3-6 Mol Alkohol der Formel (II) und pro Mol Malonsäure-Derivat der Formel (III) setzt man im allgemeinen 0,5-1,0, vorzugsweise 0,9-1,0 Mol Salicylaldehyd der Formel (IV) ein.

Bei der Durchführung des erfindungsgemäßen Verfahrens b) setzt man pro Mol Salicylaldehyd der Formel (IV) im allgemeinen 2-20, vorzugsweise 5-10 Mol sekundäres Amin und 1-2, vorzugsweise 1,2-1,5 Mol Malonsäure-Derivat der Formel (VI) ein.

Die Herstellung der erfindungsgemäßen Curmarinderivate der Formel (4a) für Z = OR⁴⁵ im Sinne einer Knoevenagel-Kondensation und anschließender Cyclisierung wird beispielhaft durch das folgende Formelschema dargestellt:

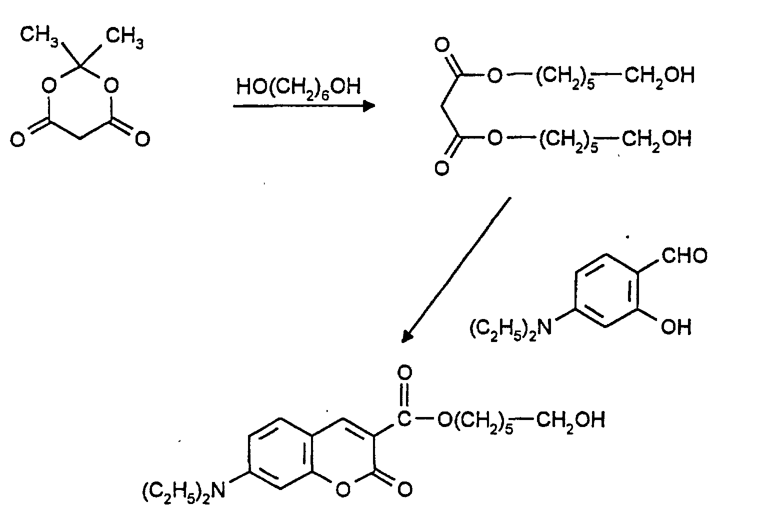

Hierbei wird zunächst Bis-(6-hydroxyhexyl)-malonat durch Umsetzung von der Meldrum's-Säure und 1,6-Hexandiol in Gegenwart katalytischer Mengen von p-Toluolsulfonsäure unter Aceton- und Wasseraustritt hergestellt. Anschließend versetzt man das Bis-(6-hydroxyhexyl)-malonat mit 4-Diethylaminosalicyladehyd in Gegenwart katalytischer Mengen Piperidinacetat unter Bildung des erwünschten 3-(6-Hydroxyhexoxycarbonyl)-7-diethylamino-cumarins.

Die Herstellung der erfindungsgemäßen Cumarinderivate der Formel (4a) für Z = NR⁴⁶R⁴⁷ wird beispielhaft durch das folgende Formelschema dargestellt:

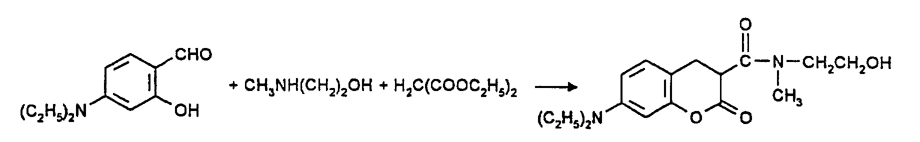

Hierbei wird 4-Diethylamino-salicylaldehyd in Gegenwart katalytischer Mengen . Piperidinacetat mit Diethylmalonat und 2-(Methylamino)-ethanol umgesetzt. Man erhält das erwünschte 3-[(N-Hydroxyethyl-N-methyl)aminocarbonyl]-7-diethylamino-cumarin.

Die Ausgangsprodukte der Formeln (I), (II), (III), (IV), (V) und (VI) sind allgemein bekannte Verbindungen der organischen Chemie.

Die folgenden 1,8-Naphthalimid-Derivate der Formel (6a), (7a-1) und (7b-1) sind ebenfalls neu und Gegenstand einer separaten Patentanmeldung DE 1 9505 941.7 vom 21. 02. 95: 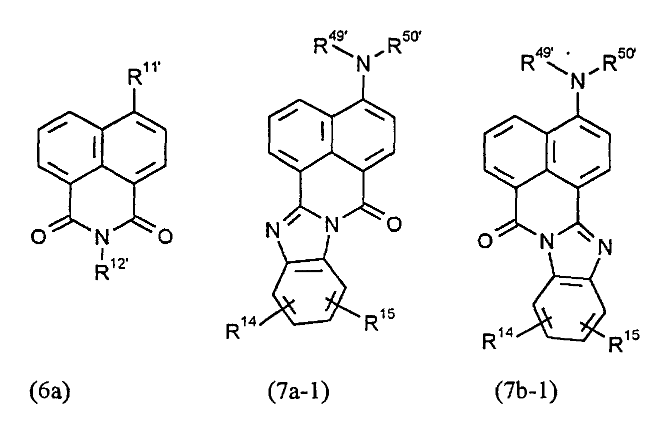 worin
- R^{11'}: für Wasserstoff, Halogen, Nitro, C₁-C₄-Alkoxycarbonyl, C₁-C₄-Acyl, C₈-C₂₄-Aralkenyl, unsubstituiertes Amino oder für ein- oder zweifach, gleich oder verschieden durch C₁-C₃₀-Alkyl, C₆-C₁₈-Aryl, C₇-C₂₄-Aralkyl substituiertes Amino steht, wobei die oben genannten Kohlenstoffketten selbst durch Hydroxy substituiert sein können,
- R^{11'}: weiterhin für Morpholinyl, Piperidinyl, Pyrrolidinyl oder Piperazinyl steht, die einen oder zwei Substituenten ausgewählt aus Methyl, Ethyl und/oder Phenyl tragen können,
- R^{12'}: für Wasserstoff oder C₁-C₃₀-Alkyl, C₁-C₃₀-Alkoxy, C₆-C₁₈-Aryl, C₇-C₂₄-Aralkyl steht, welche ein- oder mehrfach durch Hydroxy substituiert sein können, und mindestens einer der Reste R^{11'} oder R^{12'} über eine Hydroxy-Gruppe verfügt,
- R^{49'} und R^{50'}: unabhängig voneinander für C₁-C₃₀-Alkyl, C₆-C₁₈-Aryl, C₇-C₂₄-Aralkyl stehen, die durch Hydroxy substituiert sein können, wobei mindestens einer der Reste R^{49'} oder R^{50'} über eine Hydroxy-Gruppe verfügt.
- R^{49'} und R^{50'}: weiterhin gemeinsam mit dem Stickstoffatom, an das sie gebunden sind, für Morpholinyl, Piperidyl, Pyrolidyl oder Piperazinyl stehen, die einen oder zwei gleich oder verschiedene Substituenten ausgewählt aus Methyl, Ethyl und Phenyl tragen können und über mindestens eine Hydroxy-Gruppe verfügen,
- R¹⁴ und R¹⁵: unabhängig voneinander Wasserstoff, Halogen, Cyano, Halogen, Nitro, C₁-C₃₀-Alkyl, C₁-C₃₀-Alkoxy, C₆-C₁₈-Aryl, C₇-C₂₄-Aralkyl, C₁-C₁₂-Alkoxycarbonyl, C₂-C₁₂-Acyl oder C₁-C₆-(Di)-Alkylamino bedeuten,

Die erfindungsgemäßen 1,8-Naphthalimid-Derivate der Formeln (6a), (7a-1) und (7b-1), tragen mindestens eine Hydroxygruppe, über die sie an Polymerseitenketten chemisch gebunden werden können.

In der oben genannten Formel (6a) steht
- R^{11'}: vorzugsweise für Wasserstoff, Chlor, Brom, Nitro, Methoxycarbonyl, Ethoxycarbonyl, n- oder iso-Propoxycarbonyl, Methylcarbonyl, Ethylcarbonyl, n- oder iso-Propylcarbonyl, Amino, für Amino, welches ein- oder zweifach, gleich oder verschieden durch C₁-C₁₅-Alkyl, jeweils gegebenenfalls durch Methyl und/oder Ethyl substituiertes Phenyl, Naphthyl, Phenyl-C₁-C₄-alkyl oder Naphthenyl-C₁-C₄-alkyl substituiert ist, wobei die oben genannten Kohlenstoffketten selbst durch Hydroxy substituiert sein können, R^{11'} weiterhin vorzugsweise für Morpholinyl, Piperidinyl, Pyrrolidinyl oder Piperazinyl steht, die einen oder zwei Substituenten ausgewählt aus Hydroxy, Methyl, Ethyl und/oder Phenyl tragen können.
- R^{12'}: steht vorzugsweise für C₁-C₁₅-Alkyl, Phenyl oder Phenyl-C₁-C₆-alkyl, welche durch Hydroxy und die aromatischen Ringen zusätzlich noch durch Halogen, C₁-C₆-Alkyl und/oder C₁-C₆-Alkoxy substituiert sein können.
- R^{11'}: steht insbesondere für Chlor, Brom, Amino, welches ein- oder zweifach, gleich oder verschieden durch C₁-C₁₅-Alkyl substituiert ist, Morpholinyl, Piperidinyl, Pyrrolidinyl oder Piperazinyl, wobei die oben genannten Kohlenstoffketten selbst durch Hydroxy substituiert sein können.
- R^{12'}: steht insbesondere für C₁-C₁₂-Alkyl, gegebenenfalls durch Halogen, C₁-C₆-Alkyl, C₁-C₆-Alkoxy substituiertes Phenyl, die eine Hydroxygruppe tragen können.

Mindestens einer der Reste R^{11'} und R^{12'} muß über eine Hydroxygruppe verfügen.
- R^{49'} und R^{50'}: in den Formeln (7a-1) und (7b-1) stehen vorzugsweise unabhängig voneinander für C₁-C₁₅-Alkyl, Phenyl, Phenyl-C₁-C₆-alkyl, Naphthyl, Naphthyl-C₁-C₆-alkyl, die einfach oder mehrfach, insbesondere einfach durch Hydroxy oder Carboxy substituiert sein können, wobei mindestens einer der Reste R^{49'} oder R^{50'} über eine Hydroxygruppe verfügt.
- R^{49'} und R^{50'}: stehen weiterhin gemeinsam mit dem Stickstoffatom, an das sie gebunden sind, vorzugsweise für Piperidinyl oder Piperazinyl, die einen oder zwei gleich oder verschiedene Substituenten ausgewählt aus Methyl, Ethyl und Phenyl tragen können und über mindestens eine Hydroxy- oder Carboxygruppe verfügen,
- R¹⁴ und R¹⁵: in den Formeln (7a-1) und (7b-1) stehen vorzugsweise unabhängig voneinander für Wasserstoff, Halogen, C₁-C₁₅-Alkyl, C₁-C₁₅-Alkoxy, C₁-C₄-Alkoxycarbonyl, C₁-C₄-Acyl- oder Di(C₁-C₆-Alkyl)amino, jeweils durch Methyl und/oder Ethyl substituiertes Phenyl, Phenyl-C₁-C₆-alkyl, Naphthyl oder Naphthyl-C₁-C₆-alkyl.
- R^{49'} und R^{50'}: stehen insbesondere für C₁-C₁₂-Alkyl, Phenyl, Phenyl-C₁-C₆-alkyl, die durch eine Hydroxygruppe substituiert sein können, wobei mindestens einer der Reste R^{49'} oder R^{50'} über eine Hydroxy-Gruppe verfügt.
- R¹⁴ und R¹⁵: stehen insbesondere für Wasserstoff, Halogen, C₁-C₁₂-Alkyl, C₁-C₁₂-Alkoxy, Di(C₁-C₆-alkyl)amino, Phenyl.

Die Zahl der Hydroxy-Gruppen beträgt mindestens eine, es können jedoch auch bis zu vier Hydroxy-Gruppen sein.

Die aromatischen Ringe in den oben genannten Resten können einfach bis fünffach, vorzugsweise einfach bis dreifach, gleich oder verschieden durch die genannten Substituenten substituiert sein.

Die aliphatischen Kohlenstoffketten, wie z.B. Alkyl, Alkoxy, Alkylamino, Aralkyl, in R⁴³, R⁴⁴, R⁴⁵, R⁴⁶ und R⁴⁷, R^{11'}, R^{12'}, R^{45'}, R^{50'} können durch eines oder mehrere, vorzugsweise ein oder zwei Heteroatome ausgewählt aus Sauerstoff, Stickstoff und Schwefel und/oder durch ein oder mehrere, vorzugsweise ein oder zwei Phenylenringe, die durch C₁-C₄-Alkyl und/oder Halogen substituiert sein können, unterbrochen sein.

Ein Verfahren zur Herstellung von neuen 1,8-Naphthalimid-Derivaten der Formel (6a) 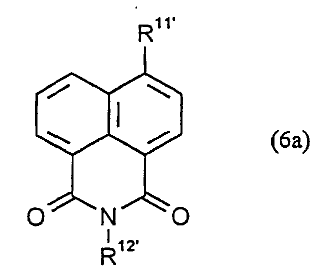 worin
- R^{11'} und R^{12'}: die obengenannte Bedeutung haben,
ist dadurch gekennzeichnet, daß man entweder
a) ein 1,8-Naphthalsäureanhydrid der Formel (VII) und ein primäres Amin der Formel (VIII), 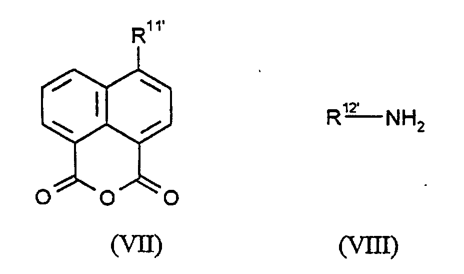 bei 50 bis 250°C, vorzugsweise 90 bis 140°C, gegebenenfalls in Gegenwart von Verdünnungsmitteln wie beispielsweise Essigsäure, Butanol, Chlorbenzol, Toluol oder Xylol miteinander umsetzt oder
b) im Falle, daß R^{11'} in Formel (6a) unsubstituiertes, ein- oder zweifach substituiertes Amino oder cyclisches Amino bedeutet, ein 1,8-Naphthalimid der Formel (6a-1) 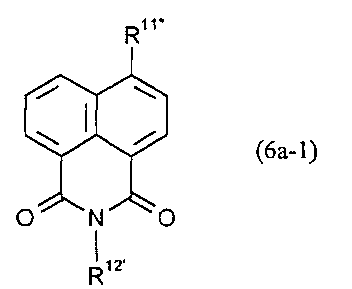 worin
   - R^{11"}: für Halogen, vorzugsweise Chlor, Brom oder Iod, oder Nitro steht,
welches aus einem 1,8-Naphthalsäureanhydrid der Formel (VIIa) und einem primären Amin der Formel (VIII) 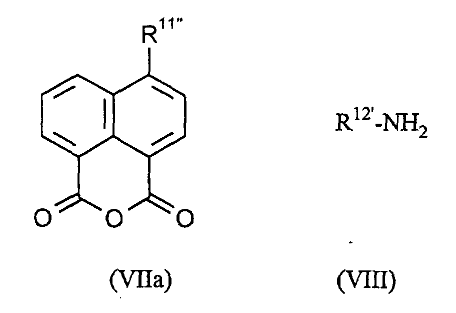 worin R^{11"} und R^{12'} die oben genannte Bedeutung haben,
bei Temperaturen von 50 bis 250°C, vorzugsweise 90 bis 140°C, gegebenenfalls in Gegenwart von Verdünnungsmitteln wie beispielsweise Essigsäure, Butanol, Chlorbenzol, Toluol oder Xylol hergestellt wird,
und die so erhaltene Verbindung der Formel (6a-1) anschließend mit einem primären oder sekundären Amin oder Piperidin, Morpholin, Pyrolidin oder Piperazin, welche einen oder zwei Substituenten ausgewählt aus Methyl, Ethyl und/oder Phenyl tragen können, oder mit einer wäßrigen Ammoniaklösung gegebenenfalls in Gegenwart von Lösungsmitteln wie beispielsweise Methoxyethanol oder Butanol gegebenenfalls unter Katalyse von beispielsweise einem Kupfer(II)-Salz bei Temperaturen von 50 bis 250°C, vorzugsweise 100 bis 150°C umsetzt.

Ein Verfahren zur Herstellung von neuen 1,8-Naphthalimid-Derivaten der Formel (7a-1) und (7b-1) (Verfahren C), 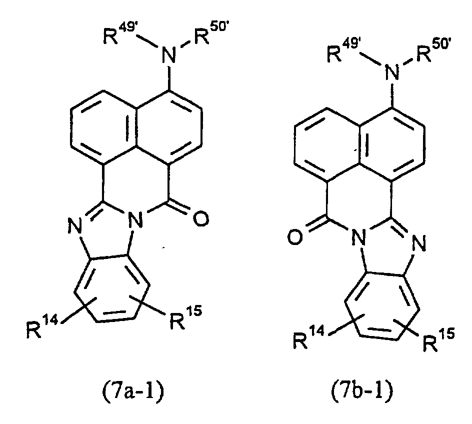 worin
- R¹⁴, R¹⁵, R^{49'} und R^{50'}: die obengenannte Bedeutung haben,
wobei man ein 1,8-Naphthalimid-Derivat der Formel (IXa und b), 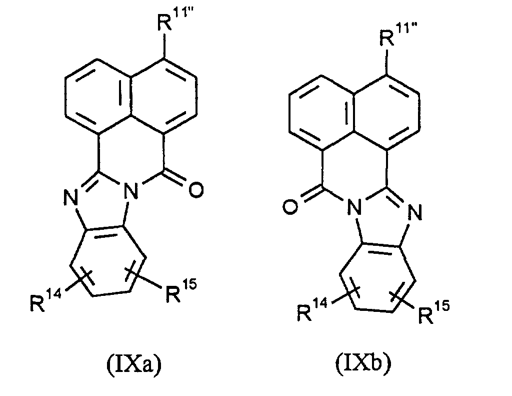 worin
- R¹⁴, R¹⁵ und R^{11"}: den obigen Bedeutungsumfang haben,
aus einem 1,8-Naphthalsäureanhydrid der Formel (VIIa) 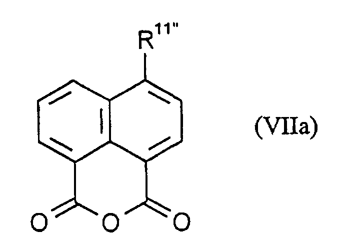 worin R¹¹" die oben genannte Bedeutung hat,
und einem o-Phenylendiamin der Formel (X) 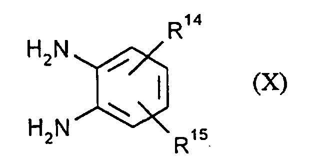 worin R¹⁴ und R¹⁵ die oben genannten Bedeutungen haben,
bei Temperaturen von 50 bis 250°C, vorzugsweise 90 bis 140°C, gegebenenfalls in Gegenwart von Lösungsmitteln wie beispielsweise Essigsäure, Butanol, Chlorbenzol, Toluol oder Xylol herstellt und das 1,8-Naphthalimid-Derivat der Formel (IXa und b) anschließend mit einem sekundären Amin der Formel (XI), 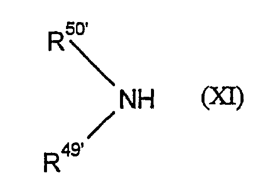 worin R^{49'} und R^{50'} die oben genannte Bedeutung haben,
unter Katalyse von beispielsweise einem Kupfer(II)-Salz bei Temperaturen von 50 bis 250°C, vorzugsweise 100 bis 150°C, gegebenenfalls in Gegenwart eines Lösungsmittels wie beispielsweise Methoxyethanol oder Butanol, umsetzt.

Bei der Durchführung des erfindungsgemäßen Verfahrens a) zur Herstellung der 1,8-Naphthalimid-Derivate der Formel (6a) setzt man im allgemeinen pro Mol Verbindung der Formel (VII) 1 bis 1,8 Mol, vorzugsweise 1,2 bis 1,4 Mol primäres Amin der Formel (VIII) ein.

Bei der Durchführung des erfindungsgemäßen Verfahrens b) zur Herstellung der 1,8-Naphthalimid-Derivate der Formel (6a-1) setzt man im allgemeinen pro Mol Verbindung der Formel (VIIa) 1 bis 1,8 Mol, vorzugsweise 1,2 bis 1,4 Mol des primären Amins der Formel (VIII) und pro Mol Verbindung der Formel (6a-1) 1,2 bis 5 Mol, vorzugsweise 2 bis 2,5 Mol des entsprechenden primären, sekundären oder cyclischen Amins.

Die Herstellung der erfindungsgemäßen 1,8-Naphthalimid-Derivate der Formel (6a), Verfahren (a) und (b) wird beispielhalft durch das folgende Formelschema dargestellt:

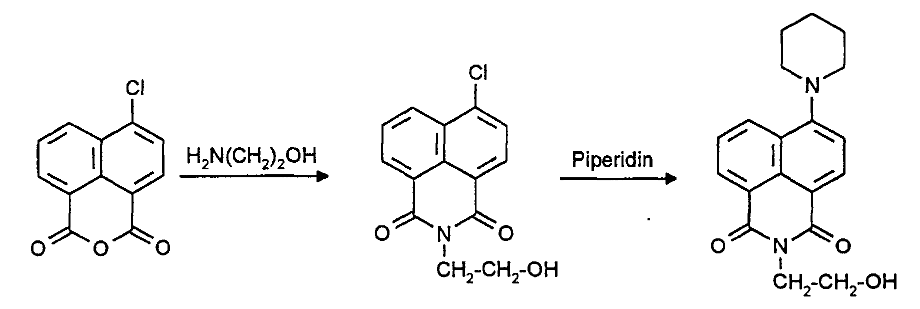

Hierbei wird zunächst das 4-Chlor-N-hydroxyethyl-1,8-naphthalimid durch Umsetzung von 4-Chlor-naphthalsäureanhydrid und 2-Aminoethanol hergestellt. Anschließend versetzt man das 4-Chlor-N-hydroxyethyl-1,8-naphthalimid mit Piperidin in Gegenwart katalytischer Menge von einem Kupfer(II)-Salz unter Bildung des erwünschten N-Hydroxyethyl-4-piperidino-1,8-naphthalimids.

Bei der Durchführung des erfindungsgemäßen Verfahrens C) zur Herstellung der 1,8-Naphthalimid-Derivate der Formel (7a-1) und (7b-1) setzt man im allgemeinen pro Mol Verbindung der Formel (VIIa) 1 bis 1,8 Mol, vorzugsweise 1,2 bis 1,4 Mol des o-Phenylendiamins der Formel (X) und pro Mol Verbindung (IXa-b) 1,2 bis 5 Mol, vorzugsweise 2 bis 2,5 Mol des sekundären Amins der Formel (XI) ein.

Die Herstellung der erfindungsgemäßen 1,8-Naphthalimid-Derivate der Formel (7a-1 und 7b-1) wird beispielhaft durch das folgende Formelschema dargestellt:

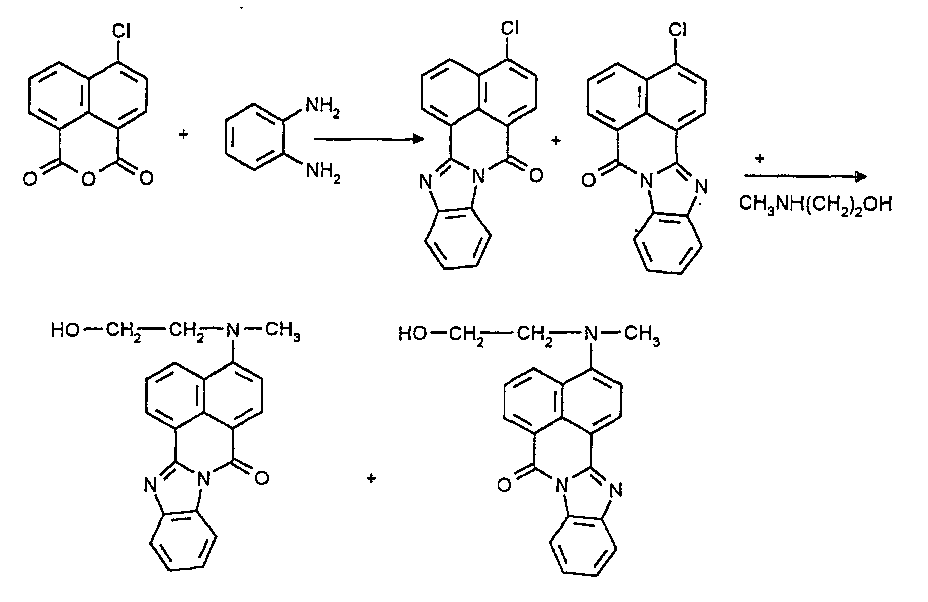

Hierbei wird zunächst das 4/5-Chlor-1,8-naphthoylen-1',2'-benzimidazol, welches als ein Isomerengemisch (ca. 3:1) anfällt, durch Umsetzung von 4-Chlornaphthalsäureanhydrid und o-Phenylendiamin hergestellt. Anschließend versetzt man das 4/5-Chlor-1,8-naphthoylen-1',2'-benzimidazol mit 2-(Methylamino)-ethanol in Gegenwart katalytischer Menge von einem Kupfer(II)-Salz unter Bildung des erwünschten 4/5-(N-Methyl-N-hydroxyethyl)amino-1,8-naphthoylen-1',2'-benzimidazols.

Die Ausgangsprodukte der Formeln (VII), (VIII), (VIIa), (X) und (XI) zur Herstellung der erfindungsgemäßen Verbindungen der Formel sind allgemein bekannte Verbindungen der organischen Chemie.

Die zur Herstellung von erfindungsgemäßen (Co)Polymerisaten weiterhin benötigten Styrol- und Acrylsäure-Derivate der Formeln (22) und (23) sind allgemein bekannte Verbindungen.

Die erfindungsgemäßen (Co)Polymerisate zeichnen sich durch ihre lumineszierenden Eigenschaften und Filmbildungsvermögen aus und lassen sich durch Gießen, Rakeln oder Spin-coating auf geeignete Unterlagen aufbringen. Die Produkte zeigen sowohl in Lösungen als auch als Filme Photolumineszenz bei Bestrahlung. Die (Co)Polymerisate der vorliegenden Erfindung sind zum Aufbau von elektrolumineszierenden Anzeigen geeignet.

Die Erfindung betrifft daher die Verwendung der oben beschriebenen (Co)Polymerisate in der lumineszierenden Schicht einer elektrolumineszierenden Anordnung, die dadurch gekennzeichnet ist,
daß sich eine elektrolumineszierende Schicht zwischen zwei Elektroden befindet,
daß mindestens eine der beiden Elektroden im sichtbaren Spektralbereich transparent ist,
daß beim Anlegen einer Gleichspannung im Bereich von 0,1 bis 100 Volt Licht im Frequenzbereich von 200 bis 2000 nm emittiert wird,
daß zwischen der elektrolumineszierenden Schicht und den Elektroden zusätzlich eine oder mehrere Zwischenschichten angeordnet sein können.

Diese Zwischenschichten sind aus der Literatur bekannt (vergl. Appl. Phys. Lett., 57, 531 (1990)) und werden dort als HTL (hole transport layer) und als ETL (electron transport layer) bezeichnet. Der Zweck solcher Zwischenschichten liegt u.a. in der Erhöhung der Elektrolumineszenzintensität.

Die erfindungsgemäßen elektrolumineszierenden Polymere können auch als eine Mischung miteinander oder mit mindestens einem weiteren Material in der elektrolumineszierenden Schicht eingesetzt werden. Bei diesem weiteren Material kann es sich um inerte Binder, ladungsträgertransportierende Substanzen wie in EP-A 532 798 oder EP-A 564 224 beschrieben, oder Mischungen aus inerten Bindern und ladungsträgertransportierenden Substanzen handeln.

Die Mischungen aus den erfindungsgemäßen Polymeren und einem weiteren Material zeichnen sich u.a. dadurch aus, daß sie filmbildend sind und durch Gießen, Rakeln oder Spin-coating großflächig auf geeignete Substrate aufgebracht werden können. Als Substrat sind transparente Träger wie Glas oder Kunststoff-Folien (z.B. Polyester, wie Polyethylenterephthalat oder Polyethylennaphthalat, Polycarbonat, Polysulfon, Polyimid-Folien) geeignet.

Bei dem inerten Binder handelt es sich vorzugsweise um lösliche transparente Polymere wie z.B. Polycarbonate, Polystyrol, Polyvinylpyridin, Polymethylphenylsiloxan und Copolymere des Polystyrols wie SAN, Polysulfone, Polyacrylate, Polyvinylcarbazol, Vinylacetat- und Vinylalkoholpolymere und -copolymere.

### Beispiele

### Beispiel 1

1. Herstellung des 3-(6-Hydroxyhexoxycarbonyl)-7-diethylamino-cumarins, Formel (24)
   Eine Lösung von Bis-(6-hydroxyhexyl)-malonat in 1,6-Hexandiol wird beim Erhitzen einer Mischung aus 21,6 g (0,15 mol) Meldrum's-Säure, 59 g (0,50 mol), 1,6-Hexandiol und 0,28 g (1,5 mmol) p-Toluolsulfonsäuremonohydrat für 2 h bei 140°C dargestellt. Anschließend versetzt man die resultierende Lösung mit 26,0 g (0,135 mol) 4-Diethylaminosalicylaldehyd, 0,7 ml Piperidin und 0,1 ml Essigsäure. Die Reaktionsmischung wird 3 h bei 110°C gerührt und nach Abkühlung mit 300 ml Wasser versetzt. Man extrahiert die Suspension mit Dichlormethan. Die organische Phase wird eingeengt und der Rückstand aus Toluol umkristallisiert. Man erhält 40,2 g (83 % der Theorie) 3-(6-Hydroxyhexoxycarbonyl)-7-diethylamino-cumarin als gelbe Kristalle von Schmelzpunkt von 85 bis 86°C.
2. Herstellung des 3-[6-(Styryl-4-dimethylsilyloxy)-hexoxycarbonyl)]-7-diethylamino-cumarins, Formel (26)
   Zu einer Lösung von 2,89 g (8,0 mmol) 3-(6-Hydroxyhexoxy-carbonyl)-7-diethylamino-cumarin (24) und 0,93 g (9,2mmol) frisch destilliertem Triethylamin in 15 ml trockenem Methylenchlorid tropft man unter Rühren und Eiswasser-Kühlung 1,73 g (8,8 mmol) 4-(Chlordimethylsilyl)-styrol (25). Die Reaktionsmischung wird 5 h bei Raumtemperatur gerührt. Anschließend wird die Suspension abgesaugt und die Lösung i. Vak. eingeengt. Das Rohprodukt wird säulenchromatographisch gereinigt (4 g, 96 % der Theorie).
3. Herstellung des Copolymerisats (28) worin x = 1 mol-%, y = 99 mol-%
   Eine Lösung von 0,10 g (0,19 mol) 3-[6-(Styryl-4-dimethylsilyloxy)-hexoxycarbonyl)]-7-diethylamino-cumarins (26), 3,67 g (0,019 mol) 9-Vinylcarbazol (27) und 30 mg (0,18 mmol) AIBN in 5 g trocknem Toluol wird entgast und anschließend unter Stickstoff bei 100°C 3 h gerührt. Die Polymerisationsmischung wird dann mit 30 mg AIBN in drei Portionen innerhalb 2 h nachgestartet. Die Lösung wird anschließend in 100 ml Methanol unter Rühren zugetropft und dann die Suspension abgesaugt. Das Rohprodukt wird noch zweimal aus Dichlormethan/Methynol-Mischung gefällt. Man erhält 3 g des gewünschten Produktes (80 % der Theorie).
4. Herstellung einer elektrolumineszierenden Anordnung
   ITO beschichtetes Glas (hergestellt von der Firma Balzers) wird in 20 x 30 mm große Substrate geschnitten und gereinigt. Dabei werden folgende Schritte sukzessiv durchgeführt:
   1) 15 min mit dest. Wasser und Falterol im Ultraschallbad spülen,
   2) 2 x 15 min mit jeweils frischem dest. Wasser im Ultraschallbad spülen,
   3) 15 min mit Ethanol im Ultraschallbad spülen,
   4) 2 x 15 min mit jeweils frischem Aceton im Ultraschallbad spülen,
   5) Trocknen auf fusselfreien Linsentüchern.

   Eine 1 %ige Lösung vom Polymer (28) in 1,2-Dichlorethan wird gefiltert (0,2 mm-Filter, Firma Sartorius). Die gefilterte Lösung wird mit einer Lackschleuder bei 1 000 U/min auf dem ITO-Glas verteilt.
   Der so hergestellte Film wird anschließend mit Aluminium (Al)-Elektroden bedampft. Dazu werden mit Hilfe einer Lochmaske isolierte Al-Punkte mit einem Durchmesser von 3 mm auf den Film gedampft. Während des Aufdampfens herrscht in einer Aufdampfapparatur (Leybold) ein Druck unter 10⁻⁵ mbar.
   Die ITO-Schicht und die Al-Elektrode wird über elektrische Zuführung mit einer Spannungsquelle verbunden. Beim Erhöhen der Spannung fließt ein elektrischer Strom durch die Anordnung und die beschriebene Schicht elektroluminesziert blau. Die Elektrolumineszenz tritt dabei unabhängig von der Polung der angelegten Spannung auf.

### Beispiel 2

1. Herstellung von N-Isoamyl-4-(N'-Methyl-N'-hydroxyethyl)-amino-1,8-naphthalimid, Formel (32)
   Ein Gemisch aus 46,6 g (0,20 mol) 4-Chlor-1,8-naphthalsäure-anhydrid, 21 g (0,24 mol) Isoamylamin und 250 ml Essigsäure wird 2 h unter Rückfluß gerührt. Die Lösung wird auf Raumtemperatur abgekühlt und anschließend mit 2 l Wasser versetzt. Man filtriert die Suspension und erhält nach Trocknen 60 g (99 % der Theorie) 4-Chlor-N-isoamyl-1,8-naphthalimid.
   Ein Gemisch aus 30 g (0,10 mol) 4-Chlor-N-isoamyl-1,8-naphthalimid, 22,5 g (0,30 mol) 2-(Methylamino)-ethanol, 2,0 g Kupfer(II)-sulfat und 150 ml Ethylenglykol-monomethylether wird 2 h unter Rückfluß gerührt. Die Lösung wird nach Abkühlen weitgehend eingeengt und anschließend mit 150 ml Wasser behandelt. Man extrahiert die Suspension mit Dichlormethan. Die organische Phase wird eingeengt und der Rückstand aus Toluol umkristallisiert. Man erhält 24,5 g (71 % der Theorie) N-Isoamyl-4-(N'-Methyl-N'-hydroxyethyl)amino-1,8-naphthalimid als braune Kristalle (Schmelzpunkt 117,0-117,5°C).
2. Herstellung des N-Isoamyl-4-[N'-Methyl-N'-Methyl-N'-(2-Styryl-4-dimethylsilyloxyethyl)]-amino-1,8-naphthalimids (33)
   In Analogie zu dem in Beispiel 1, Punkt 2 beschriebenen Verfahren wird ausgehend aus N-Isoamyl-4-(N'-Methyl-N'-hydroxyethyl)-amino-1,8-naphthalimids (32) und 4-(Chlordimethylsilyl)-styrol (25) das Styrolderivat (33) in 94 %iger Ausbeute hergestellt.
3. Herstellung des Homopolymerisats, Formel (34)
   In Analogie zu dem in Beispiel 1, Punkt 3, beschriebenen Verfahren läßt sich aus 1,71 g (3,4 mmol) N-Isoamyl-4-[N'-Methyl-N'-(2-Styryl-4-dimethylsilyloxyethyl)]-amino-1,8-naphthalimids (33) und insgesamt 24 mg (0,15 mmol) AIBN mit Toluol als Lösungsmittel 1,55 g (91 % der Theorie) des Homopolymerisats (34) herstellen.

### Beispiel 3

1. Herstellung des 4/5-(N-Methyl-N-hydroxyethyl)amino-1,8-napthoylen-1',2'-benzimidazols der Formel (29)
   In Analogie zu dem Verfahren gemäß Beispiel 2, Punkt 1 erhält man 4-Chlor-1,8-naphthoylen-1',2'-benzimidazol aus 4-Chlor-1,8-naphthalsäureanhydrid und o-Phenylendiamin in 87 %iger Ausbeute, sowie 4/5-(N-Methyl-N-hydroxyethyl)-amino-1,8-naphthoylen-1'2'-benzimidazol (29) aus 4-Chlor-1,8-naphthaloylen-1',2'-benzimidazol und 2-(Methylamino)-ethanol in 82 %iger Ausbeute als rotbraune Kristalle vom Schmelzpunkt 168-169°C.
2. Herstellung des 4/5-[N-Methyl-N-(2-Styryl-4-dimethylsilyloxyethyl)amino-1,8-naphthoylen-1',2'-benzimidazols (30)
   In Analogie zu dem in Beispiel 1, Punkt 2 beschriebenen Verfahren wird ausgehend aus 4/5-(N-Methyl-N-hydroxyethyl)-amino-1,8-napthoylen-1',2'-benzimidazols der Formel (29) und 5-(Chlordimethyl-silyl)-styrol (25) das Styrolderivat (30) in 83 %iger Ausbeute hergestellt.
3. Herstellung des Copolymerisats (31), worin x = 1 mol-%, y = 99 mol-%

In Analogie zu dem in Beispiel 1, Punkt 3 beschriebenen Verfahren läßt sich aus 0,16 g (0,32 mmol) 4/5-[N-Methyl-N-(2-Sty-4-ryldimethylsilyloxyethyl)-amino-1,8-naphthoylen-1',2'-benzimidazols (30), 3 g (29 mmol) Styrol und insgesamt 60 mg (0,36 mmol) AIBN mit Toluol als Lösungsmittel 2,8 g (89 % der Theorie) des Copolymerisats (31) herstellen.

## Patentansprüche

1. (Co)Polymerisate, die mindestens einen wiederkehrenden Kettenbaustein der allgemeinen Formel (1) oder (2) und gegebenenfalls wiederkehrende Einheiten der allgemeinen Formel (3) enthalten 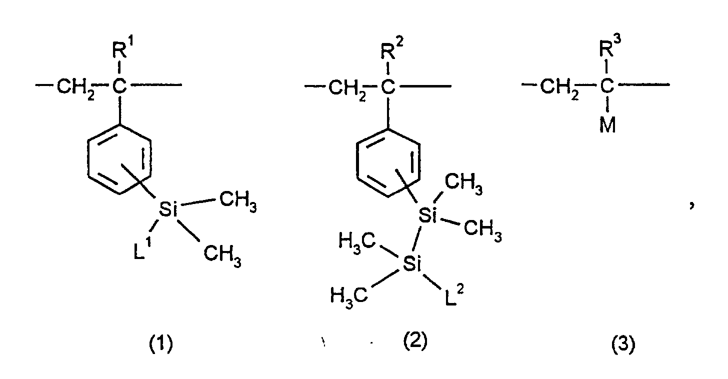 worin
R¹, R² und R³ unabhängig voneinander Wasserstoff oder C₁-C₆-Alkyl bedeuten,
M für CN oder C₁-C₃₀-Alkoxycarbonyl, C₁-C₃₀-(Di)Alkylaminocarbonyl, C₁-C₃₀-Alkylcarbonyl steht, die jeweils durch Hydroxy oder C₁-C₆-Alkoxycarbonyl substituiert sein können, weiterhin für Phenyl, Naphthyl, Anthracenyl, Pyridyl oder Carbazolyl steht, die jeweils durch Reste aus der Gruppe Halogen, Hydroxy, Silyl, C₁-C₃₀-Alkyl, C₆-C₁₈-Aryl, C₁-C₃₀-Alkoxy, C₁-C₃₀-Alkoxycarbonyl, C₁-C₃₀-Acyloxy und C₁-C₃₀-Alkylcarbonyl substituiert sein können,
wobei der Anteil der Struktureinheiten der Formeln (1) und/oder (2) jeweils 0,5 bis 100 Mol-% und (3) 0 bis 99,5 Mol-% betragen und sich die Mol-%-Anteil zu 100 ergänzen, und
L¹ und L² unabhängig voneinander für einen photolumineszierenden Rest stehen, der auf dem Gerüst eines Fluoreszenzfarbstoffs basiert, der ausgewählt ist aus der Gruppe der Cumarine der Formel (4) 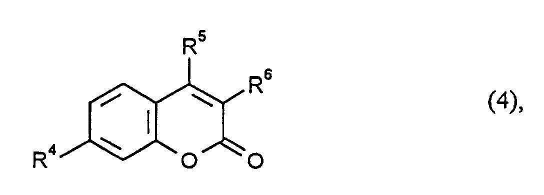 Pyrene der Formel (5) 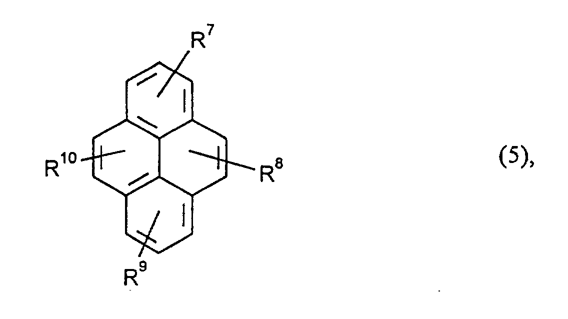 1,8-Naphthalimide der Formel (6) 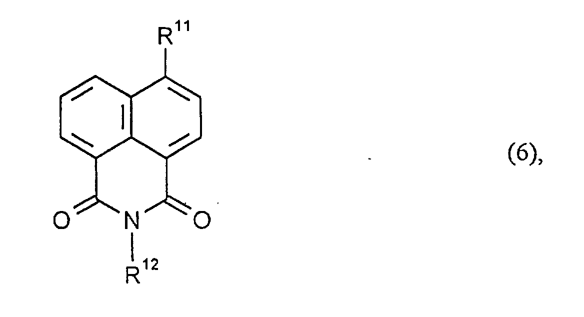 1,8-Naphthaloylen-1',2'-benzimidazole der Formel (7a) und (7b) 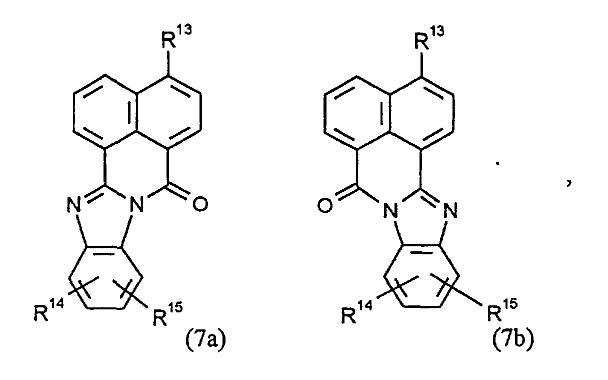 Phenothiazine oder Phenoxazine der Formel (8) 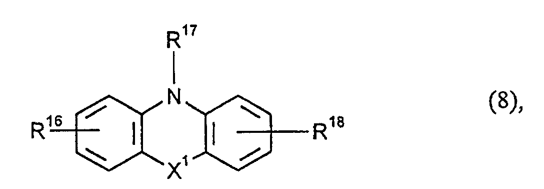 mit X¹ = 0 oder S,
Benzopyrone der Formel (9) 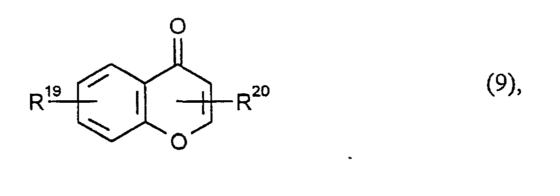 Carbazole, Fluorene, Dibenzothiophene und -furane der Formel (10) 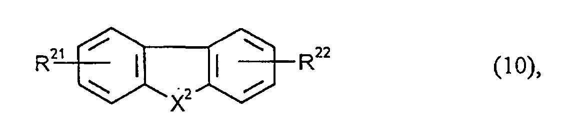 mit X² = NR²³, CH₂, S oder O, wobei R²³ für Wasserstoff oder C₁-C₆-Alkyl steht,
Oxazole, 1,3,4-Oxadiazole der Formel (11) 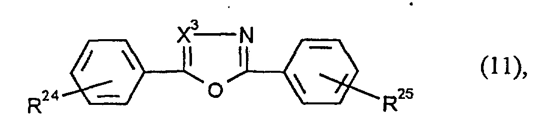 mit X³ = CH oder N
Benzochinoline der Formel (12) 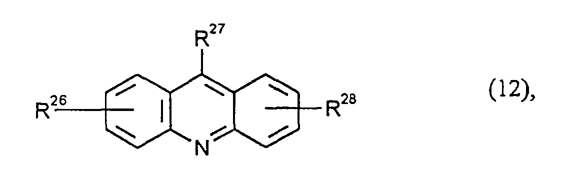 9,10-Bis-(Phenylethinyl)-Anthracene der Formel (13) 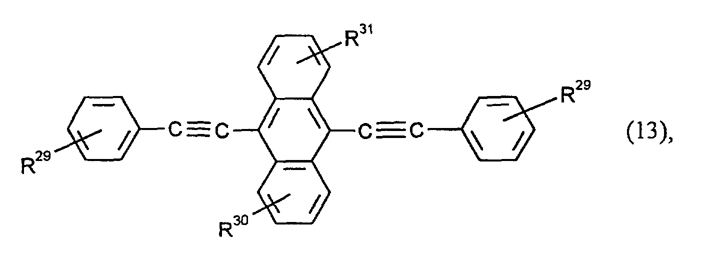 Fluorone der Formel (14) 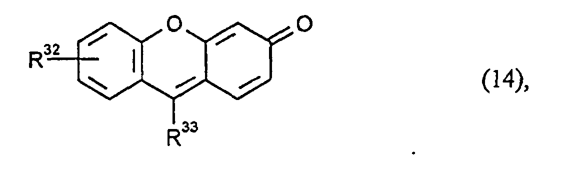 9,10-Diphenylanthracen der Formel (15) 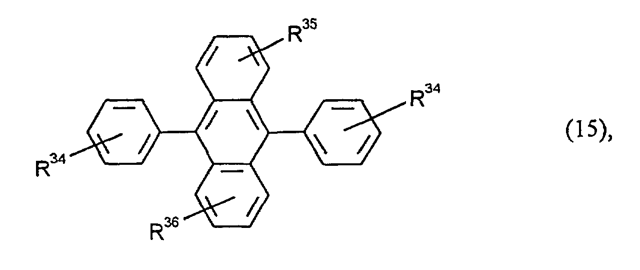 2-Styrylbenzazol der Formel (16) 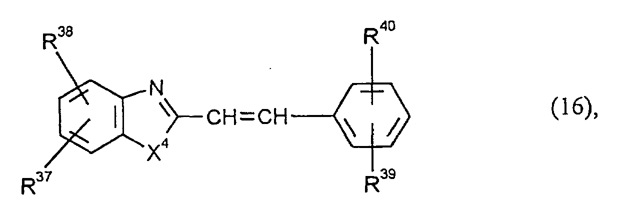 mit X⁴ = O, S, Se oder CH₂,
wobei
R⁴ für Wasserstoff, C₁-C₃₀-Alkyl, C₆-C₁₈-Aryl, C₇-C₃₄-Aralkyl oder C₁-C₃₀-Alkoxy oder für 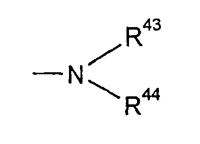 steht, wobei
R⁴³ und R⁴⁴ unabhängig voneinander für Wasserstoff, C₁-C₃₀-Alkyl, C₆-C₁₈-Aryl, C₇-C₂₄-Aralkyl steht, die jeweils durch Hydroxy oder C₁-C₄-Alkoxycarbonyl substituiert sein können, oder
R⁴³ und R⁴⁴ gemeinsam mit dem Stickstoff-Atom, an das sie gebunden sind, einen Morpholin-, Piperidin-, Pyrrolidin- oder Piperazinring, der einen oder zwei Substituenten aus der Gruppe Methyl, Ethyl und Phenyl tragen kann, bedeuten können,
R⁵ für Wasserstoff, Cyano, C₁-C₃₀-Alkyl, C₆-C₁₈-Aryl, C₇-C₃₄-Aralkyl, C₁-C₃₀-Alkoxy, C₂-C₁₂-Acyl, C₁-C₁₂-Alkoxycarbonyl, C₁-C₁₂-(Di)-Alkylaminocarbonyl steht,
R⁶ für Wasserstoff, Cyano, C₁-C₃₀-Alkyl, C₆-C₁₈-Aryl, C₇-C₃₄-Aralkyl, C₁-C₃₀-Alkoxy oder für 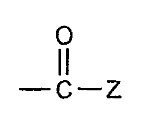 steht, wobei Z für eine Gruppe OR⁴⁵ oder 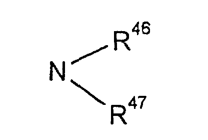 steht und
R⁴⁵, R⁴⁶ und R⁴⁷ unabhängig voneinander für C₁-C₃₀-Alkyl, C₆-C₁₈-Aryl oder C₇-C₂₄-Aralkyl stehen, wobei die aromatischen Ringe zusätzlich noch durch Halogen, C₁-C₆-Alkyl, C₁-C₆-Alkoxy substituiert sein können,
R⁷, R⁸ und R⁹ unabhängig voneinander Wasserstoff, C₁-C₃₀-Alkyl, C₆-C₁₈-Aryl, C₇-C₂₄-Aralkyl, C₁-C₃₀-Alkoxy, Cyano, C₂-C₁₂-Alkoxycarbonyl, C₁-C₁₂-(Di)Alkylaminocarbonyl oder eine Aminogruppe mit einer oder zwei C₁-C₆-Alkylgruppen bedeuten,
R¹⁰ für Wasserstoff, Cyano, C₁-C₃₀-Alkyl, C₆-C₁₈-Aryl, C₇-C₃₄-Aralkyl, C₁-C₃₀-Alkoxy, Amino, eine Aminogruppe mit einer oder zwei C₁-C₆-Alkylgruppen, C₂-C₁₂-Acyl, C₁-C₁₂-Alkoxycarbonyl, C₁-C₁₂-(Di)-Alkylaminocarbonyl bedeutet,
R¹¹ für Wasserstoff, Halogen, Nitro, C₁-C₄-Alkoxycarbonyl, C₁-C₄-Acyl, C₈-C₂₄-Aralkenyl, unsubstituiertes Amino oder für ein- oder zweifach, gleich oder verschieden durch C₁-C₃₀-Alkyl, C₆-C₁₈-Aryl oder C₇-C₂₄-Aralkyl substituiertes Amino steht,
R¹¹ weiterhin für Morpholinyl, Piperidinyl, Pyrrolidinyl oder Piperazinyl steht, die einen oder zwei Substituenten ausgewählt aus Methyl, Ethyl und/oder Phenyl tragen können,
R¹² für Wasserstoff, C₁-C₃₀-Alkyl, C₆-C₁₈-Aryl, C₇-C₂₄-Aralkyl oder C₁-C₃₀-Alkoxy steht,
R¹³ für Wasserstoff, C₁-C₃₀-Alkyl, C₆-C₁₈-Aryl, C₇-C₃₄-Aralkyl, C₁-C₃₀-Alkoxy oder 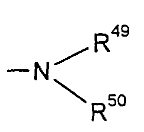 steht, wobei
R⁴⁹ und R⁵⁰ unabhängig voneinander für C₁-C₃₀-Alkyl, C₆-C₁₈-Aryl, C₇-C₂₄-Aralkyl stehen oder
R⁴⁹ und R⁵⁰ weiterhin gemeinsam mit dem Stickstoffatom, an das sie gebunden sind, für Morpholinyl, Piperidinyl, Pyrrolidinyl oder Piperazinyl stehen, die einen oder zwei gleich oder verschiedene Substituenten ausgewählt aus Methyl, Ethyl und Phenyl tragen können,
R¹⁴ und R¹⁵ unabhängig voneinander Wasserstoff, Cyano, Halogen, Nitro, C₁-C₃₀-Alkyl, C₁-C₃₀-Alkoxy, C₆-C₁₈-Aryl oder C₇-C₂₄-Aralkyl, C₁-C₁₂-Alkoxycarbonyl, C₂-C₁₂-Acyl, C₁-C₁₂-(Di)Alkylaminocarbonyl, C₁-C₆-(Di)Alkylamino bedeuten,
R¹⁷ und R²³ Wasserstoff, C₁-C₃₀-Alkyl, C₆-C₁₈-Aryl oder C₇-C₂₄-Aralkyl bedeuten und
R¹⁶, R¹⁸ bis R²² und R²⁴ bis R⁴⁰ unabhängig voneinander Wasserstoff, Cyano, C₁-C₃₀-Alkyl, C₆-C₁₈-Aryl, C₇-C₃₄-Aralkyl, C₁-C₃₀-Alkoxy, eine Aminogruppe mit einer oder zwei C₁-C₆-Mkylgruppen, unsubstituiertes Amino, C₂-C₁₂-Acyl, C₁-C₁₂-Alkoxycarbonyl oder C₁-C₁₂-(Di)Alkylaminocarbonyl bedeuten, wobei die aliphatischen Kohlenstoffketten, wie z.B. Alkyl, Alkoxy, Alkylamino, Aralkyl, in den Resten von R⁴ bis R¹³, R¹⁶ bis R⁴⁰ durch eines oder mehrere, vorzugsweise ein oder zwei Heteroatome ausgewählt aus Sauerstoff, Stickstoff und Schwefel und/oder durch einen oder mehrere, vorzugsweise ein oder zwei Phenylenringe, die durch C₁-C₄-Alkyl und/oder Halogen substituiert sein können, unterbrochen sein können,
und wobei weiterhin die Anknüpfung des Luminophors an die Polymerseitenketten über ein Sauerstoff einer Hydroxy-Gruppe an den obengenannten Substituenten erfolgt.

2. (Co)Polymerisate gemäß Anspruch 1, wobei der Anteil der Struktureinheiten der Formeln (1) und/oder (2) 0,5 bis 60 Mol-% und gegebenenfalls der Formel (3) 40 bis 99,5 Mol-% betragen.

3. (Co)Polymerisate gemäß Anspruch 1, wobei L für einen Fluoreszenzfarbstoff ausgewählt aus der Gruppe der Cumarine der Formel (4), 'Pyrene der Formel (5), 1,8-Naphthalimide der Formel (6), 1,8-Naphthaloylen-1',2'-benzimidazole der Formel (7), Phenotiazine oder Phenoxazine der Formel (8), Carbazole und Fluorene der Formel (10) steht.

4. Verfahren zur Herstellung von (Co)Polymerisation der Formel (1) gemäß Anspruch 1, wobei man Monomere der Formel (20) oder (21) 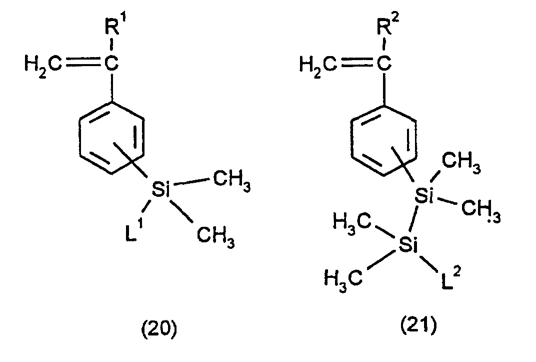 aus einem mit einer OH-, COOH- oder NH-Gruppe funktionalisierten Fluoreszenzfarbstoff, welcher die Struktur von L enthält,
und einem Styrol- oder Acrylsäurederivat der Formel (22) und (23) 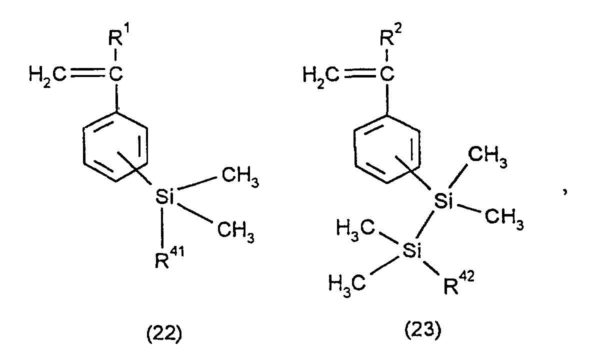 worin
R¹ und R² den obengenannten Bedeutungsumfang haben,
R⁴¹ und R⁴² für Halogen steht und
in Gegenwart eine Base herstellt und diese dann gegebenenfalls in Gegenwart von Comonomeren der Bausteine gemäß Formel (3) polymerisiert.

5. Verwendung der (Co)Polymerisate der Formel (1) gemäß Anspruch 1 zur Herstellung von elektrolumineszierenden Anordnungen.

6. Elektrolumineszierende Anordnung, die als elektrolumineszierende Substanz (Co)Polymerisate gemäß Anspruch 1 enthält.

7. Elektrolumineszierende Anordnung gemäß Anspruch 6, enthaltend zwei Elektroden, zwischen denen sich eine elektrolumineszierende Schicht befindet, die die (Co)Polymerisate als elektrolumineszierende Schicht enthalten, und wobei zwischen der elektrolumineszierenden Schicht und den Elektroden eine oder mehrere Zwischenschichten angeordnet sein können.

## Claims

1. (Co)polymers which contain at least one repeat chain unit of the general formula (1) or (2) and optionally repeat units of the general formula (3), 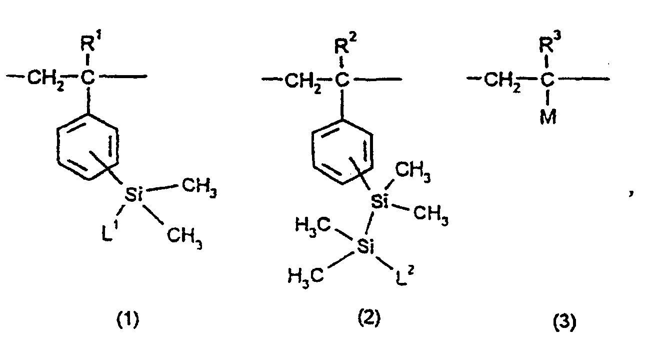 in which
R¹, R² and R³ mutually independently mean hydrogen or C₁-C₆ alkyl,
M denotes CN or C₁-C₃₀ alkoxycarbonyl, C₁-C₃₀ (di)alkylaminocarbonyl, C₁-C₃₀ alkylcarbonyl, which may each be substituted by hydroxy or C₁-C₆ alkoxycarbonyl, and furthermore denotes phenyl, naphthyl, anthracenyl, pyridyl or carbazolyl, which may each be substituted by residues from the group halogen, hydroxy, silyl, C₁-C₃₀ alkyl, C₆-C₁₈ aryl, C₁-C₃₀ alkoxy, C₁-C₃₀ alkoxycarbonyl, C₁-C₃₀ acyloxy and C₁-C₃₀ alkylcarbonyl,
wherein the proportion of structural units of the formulae (1) and/or (2) is in each case 0.5 to 100 mol% and of (3) is 0 to 99.5 mol% and the molar percentages add up to 100, and
L¹ and L² mutually independently denote a photoluminescent residue which is based on the skeleton of a fluorescent dye which is selected from the group of coumarins of the formula (4) 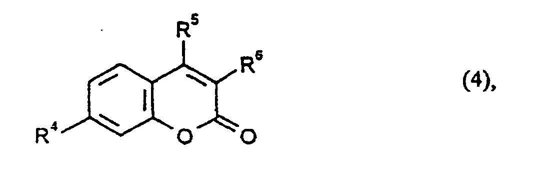 pyrenes of the formula (5) 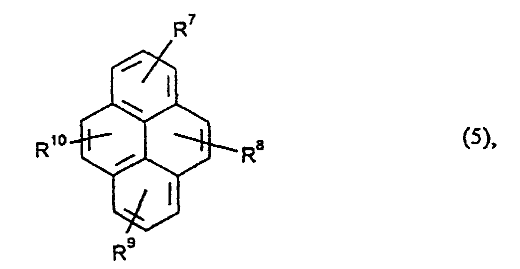 1,8-naphthalimides of the formula (6) 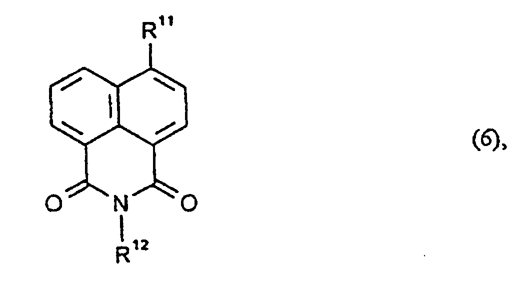 1,8-naphthaloylene-1',2'-benzimidazoles of the formulae (7a) and (7b) 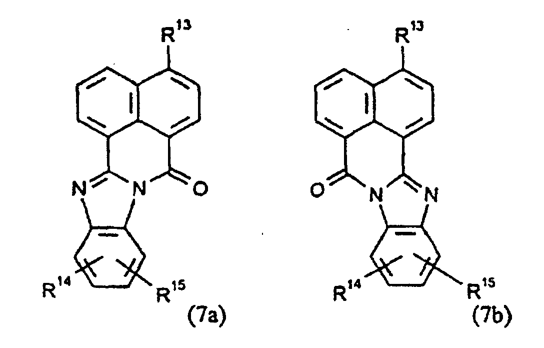 phenothiazines or phenoxazines of the formula (8) 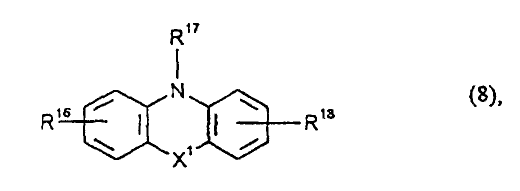 where X¹ = O or S,
benzopyrones of the formula (9) 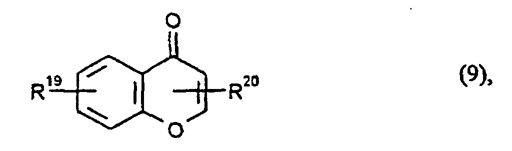 carbazoles, fluorenes, dibenzothiophenes and -furans of the formula (10) 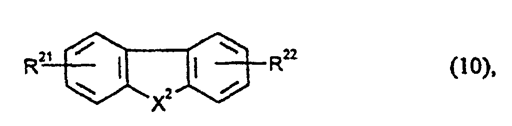 where X² = NR²³, CH₂, S or O, wherein R²³ denotes hydrogen or C₁-C₆ alkyl,
oxazoles, 1,3,4-oxadiazoles of the formula (11) 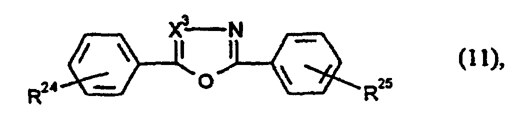 where X³ = CH or N
benzoquinolines of the formula (12) 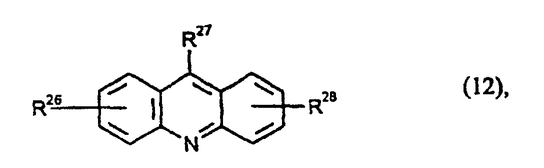 9,10-bis-(phenylethynyl)anthracenes of the formula (13) 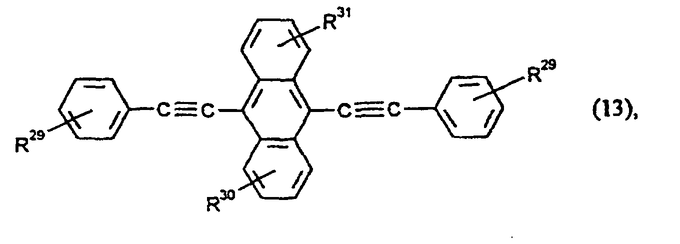 fluorones of the formula (14) 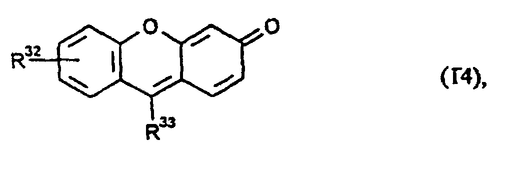 9,10-diphenylanthracene of the formula (15) 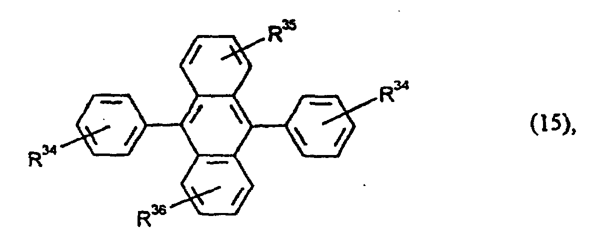 2-styrylbenzazole of the formula (16) 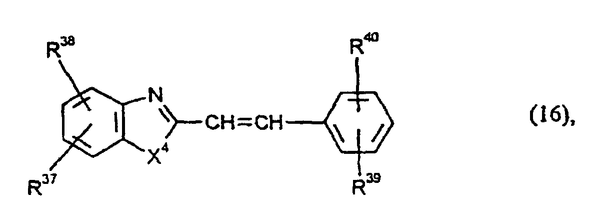 where X⁴ = O, S, Se or CH₂,
wherein
R⁴ denotes hydrogen, C₁-C₃₀ alkyl, C₆-C₁₈ aryl, C₇-C₃₄ aralkyl or C₁-C₃₀ alkoxy or 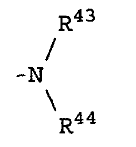 wherein
R⁴³ and R⁴⁴ mutually independently denote hydrogen, C₁-C₃₀ alkyl, C₆-C₁₈ aryl, C₇-C₂₄ aralkyl, which may each be substituted by hydroxy or C₁-C₄ alkoxycarbonyl, or,
R⁴³ and R⁴⁴, together with the nitrogen atom to which they are attached, may mean a morpholine, piperidine, pyrrolidine or piperazine ring, which may bear one or two substituents from the group methyl, ethyl and phenyl,
R⁵ denotes hydrogen, cyano, C₁-C₃₀ alkyl, C₆-C₁₈ aryl, C₇-C₃₄ aralkyl, C₁-C₃₀ alkoxy, C₂-C₁₂ acyl, C₁-C₁₂ alkoxycarbonyl, C₁-C₁₂ (di)alkylaminocarbonyl,
R⁶ denotes hydrogen, cyano, C₁-C₃₀ alkyl, C₆-C₁₈ aryl, C₇-C₃₄ aralkyl, C₁-C₃₀ alkoxy or 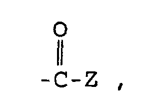 wherein Z denotes a group OR⁴⁵ or 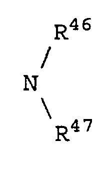 and
R⁴⁵, R⁴⁶ and R⁴⁷ mutually independently denote C₁-C₃₀ alkyl, C₆-C₁₈ aryl or C₇-C₂₄ aralkyl, wherein the aromatic rings may additionally be substituted by halogen, C₁-C₆ alkyl, C₁-C₆ alkoxy,
R⁷, R⁸ and R⁹ mutually independently mean hydrogen, C₁-C₃₀ alkyl, C₆-C₁₈ aryl, C₇-C₂₄ aralkyl, C₁-C₃₀ alkoxy, cyano, C₂-C₁₂ alkoxycarbonyl, C₁-C₁₂ (di)alkylaminocarbonyl or an amino group with one or two C₁-C₆ alkyl groups,
R¹⁰ means hydrogen, cyano, C₁-C₃₀ alkyl, C₆-C₁₈ aryl, C₇-C₃₄ aralkyl, C₁-C₃₀ alkoxy, amino, an amino group with one or two C₁-C₆ alkyl groups, C₂-C₁₂ acyl, C₁-C₁₂ alkoxycarbonyl, C₁-C₁₂ (di)alkylaminocarbonyl,
R¹¹ denotes hydrogen, halogen, nitro, C₁-C₄ alkoxycarbonyl, C₁-C₄ acyl, C₈-C₂₄ aralkenyl, unsubstituted amino, or amino identically or differently mono- or disubstituted by C₁-C₃₀ alkyl, C₆-C₁₈ aryl or C₇-C₂₄ aralkyl,
R¹¹ furthermore denotes morpholinyl, piperidinyl, pyrrolidinyl or piperazinyl, which may bear one or two substituents selected from methyl, ethyl and/or phenyl,
R¹² denotes hydrogen, C₁-C₃₀ alkyl, C₆-C₁₈ aryl, C₇-C₂₄ aralkyl or C₁-C₃₀ alkoxy,
R¹³ denotes hydrogen, C₁-C₃₀ alkyl, C₆-C₁₈ aryl, C₇-C₃₄ aralkyl, C₁-C₃₀ alkoxy or 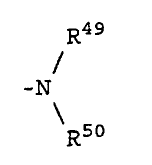 wherein
R⁴⁹ and R⁵⁰ mutually independently denote C₁-C₃₀ alkyl, C₆-C₁₈ aryl, C₇-C₂₄ aralkyl or,
R⁴⁹ and R⁵⁰, together with the nitrogen atom to which they are attached, furthermore denote morpholinyl, piperidinyl, pyrrolidinyl or piperazinyl, which may bear one or two identical or different substituents selected from methyl, ethyl and phenyl,
R¹⁴ and R¹⁵ mutually independently mean hydrogen, cyano, halogen, nitro, C₁-C₃₀ alkyl, C₁-C₃₀ alkoxy, C₆-C₁₈ aryl or C₇-C₂₄ aralkyl, C₁-C₁₂ alkoxycarbonyl, C₂-C₁₂ acyl, C₁-C₁₂ (di)alkylaminocarbonyl, C₁-C₆ (di)alkylamino,
R¹⁷ and R²³ mean hydrogen, C₁-C₃₀ alkyl, C₆-C₁₈ aryl or C₇-C₂₄ aralkyl and
R¹⁶, R¹⁸ to R²², R²⁴ to R⁴⁰ mutually independently mean hydrogen, cyano, C₁-C₃₀ alkyl, C₆-C₁₈ aryl, C₇-C₃₄ aralkyl, C₁-C₃₀ alkoxy, an amino group with one or two C₁-C₆ alkyl groups, unsubstituted amino, C₂-C₁₂ acyl, C₁-C₁₂ alkoxycarbonyl or C₁-C₁₂ (di)alkylaminocarbonyl, wherein the aliphatic carbon chains, such as for example alkyl, alkoxy, alkylamino, aralkyl, in the residues R⁴ to R¹³, R¹⁶ to R⁴⁰ may be interrupted by one or more, preferably one or two heteroatoms selected from oxygen, nitrogen and sulfur and/or by one or more, preferably one or two phenylene rings, which may be substituted by C₁-C₄ alkyl and/or halogen,
and wherein furthermore the luminophore is attached to the polymer side chains via an oxygen of a hydroxy group on the above-stated substituents.

2. (Co)polymers according to claim 1, wherein the proportion of the structural units of the formulae (1) and/or (2) is 0.5 to 60 mol% and optionally that of the formula (3) is 40 to 99.5 mol%.

3. (Co)polymers according to claim 1, wherein L denotes a fluorescent dye selected from the group of coumarins of the formula (4), pyrenes of the formula (5), 1,8-naphthalimides of the formula (6), 1,8-naphthaloylene-1',2'-benzimidazoles of the formula (7), phenothiazines or phenoxazines of the formula (8), carbazoles and fluorenes of the formula (10).

4. Process for the production of (co)polymerisation of the formula (1) according to claim 1, wherein monomers of the formula (20) or (21) 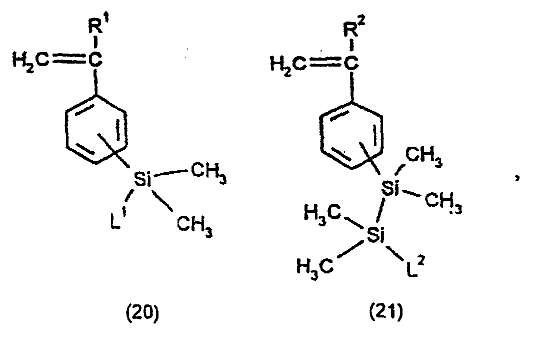 are produced from a fluorescent dye functionalised with an OH, COOH or NH group, which dye contains the structure of L,
and from a styrene or acrylic acid derivative of the formula (22) and (23) 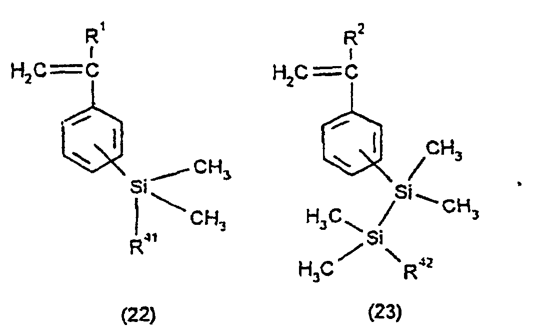 in which
R¹ and R² have the above-stated meaning and
R⁴¹ and R⁴² denote halogen and
in the presence of a base and these are then polymerised, optionally in the presence of comonomers of units according to the formula (3).

5. Use of the (co)polymers of the formula (1) according to claim 1 for the production of electroluminescent arrangements.

6. Electroluminescent arrangement which contains (co)polymers according to claim 1 as the electroluminescent substance.

7. Electroluminescent arrangement according to claim 6 containing two electrodes, between which is located an electroluminescent layer, which contains the (co)polymers as the electroluminescent layer and wherein one or more interlayers may be arranged between the electroluminescent layer and the electrodes.

## Revendications

1. (Co)polymères contenant au moins un motif caténaire répété de formule générale (1) ou (2) et le cas échéant des motifs répétés de formule générale (3) 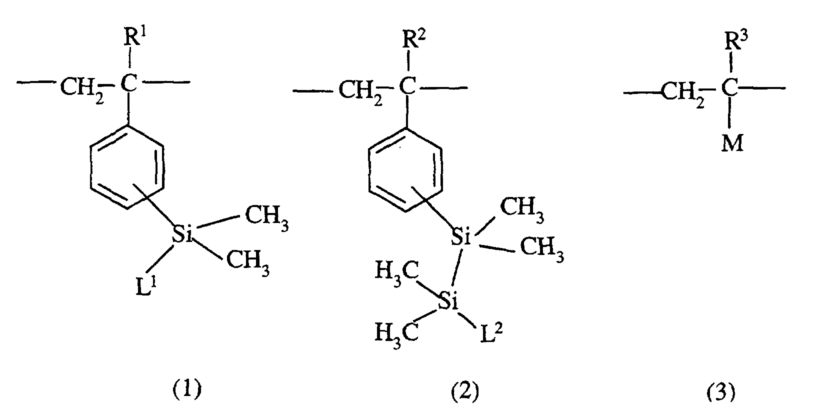 dans lesquelles
R¹, R² et R³ représentent chacun, indépendamment les uns des autres, l'hydrogène ou un groupe alkyle en C₁-C₆,
M représente CN ou un groupe (alcoxy en C₁-C₃₀)carbonyle, (di)(alkyle en C₁-C₃₀)aminocarbonyle, (alkyle en C₁-C₃₀)carbonyle, chacun d'eux pouvant porter des substituants hydroxy ou (alcoxy en C₁-C₆)carbonyle, ou bien un groupe phényle, naphtyle, anthracényle, pyridyle ou carbazolyle, chacun d'eux pouvant porter des substituants choisis parmi les halogènes, les groupes hydroxy, silyle, alkyle en C₁-C₃₀, aryle en C₆-C₁₈, alcoxy en C₁-C₃₀, (alcoxy en C₁-C₃₀)carbonyle, acyloxy en C₁-C₃₀ et (alkyle en C₁-C₃₀)carbonyle,
la proportion des motifs de structure de formules (1) ou (2) représentant de 0,5 à 100 mol % pour chacun d'eux et la proportion des motifs de formule (3), 0 à 99,5 mol %, ces proportions molaires se rapportant à 100 %, et
L¹ et L² représentent chacun, indépendamment l'un de l'autre, un radical photoluminescent à base du squelette d'un colorant fluorescent choisi dans le groupe des coumarines de formule (4) 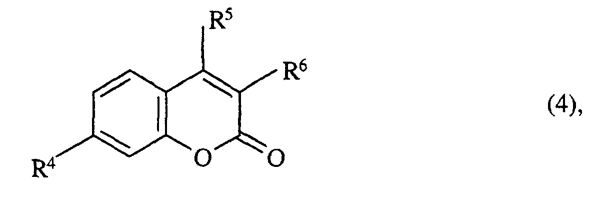 des pyrènes de formule (5) 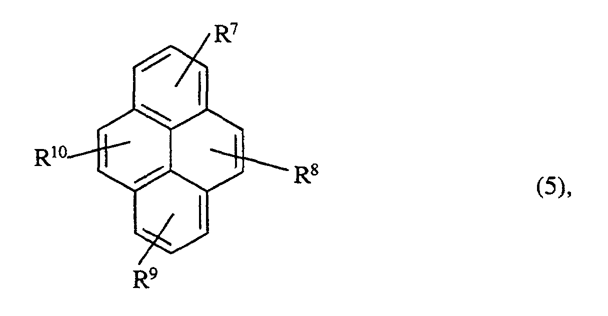 des 1,8-naphtalimides de formule (6) 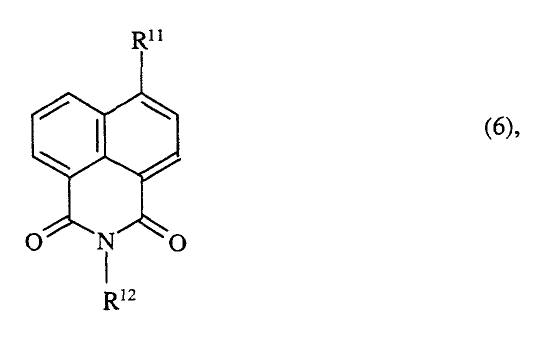 des 1,8-naphtaloylène-1',2'-benzimidazoles de formules (7a) et (7b) 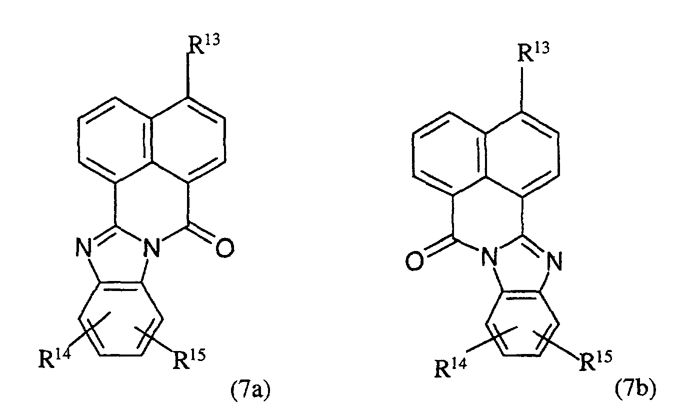 des phénothiazines ou phénoxazines de formule (8) 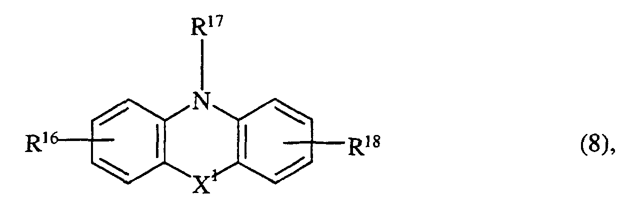 dans laquelle X¹ = O ou S,
des benzopyrones de formule (9) 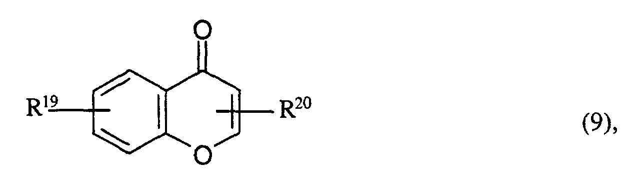 des carbazoles, fluorènes, dibenzothiophènes et -furannes de formule (10) 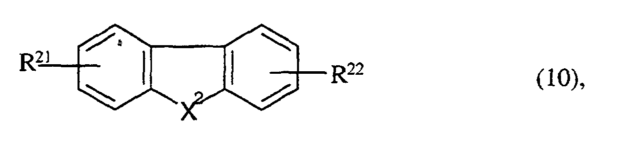 dans laquelle X² = NR²³, CH₂, S ou O, R²³ représentant l'hydrogène ou un groupe alkyle en C₁-C₆,
des oxazoles, des 1,3,4-oxadiazoles de formule (11) 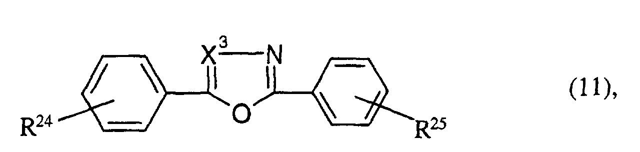 dans laquelle X³ = CH ou N
des benzoquinoléines de formule (12) 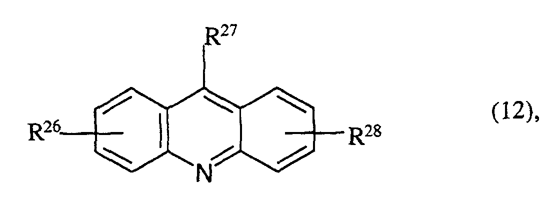 des 9,10-bis-(phényléthynyl)-anthracènes de formule (13) 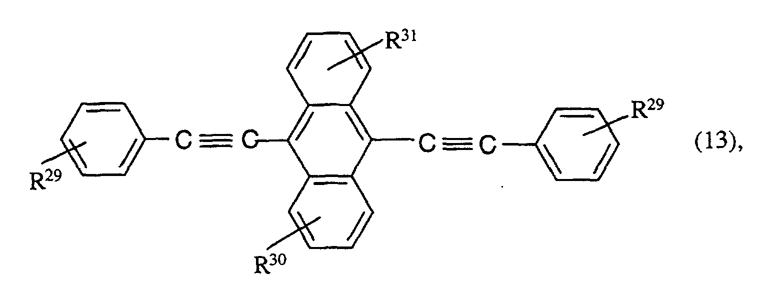 des fluorones de formule (14) 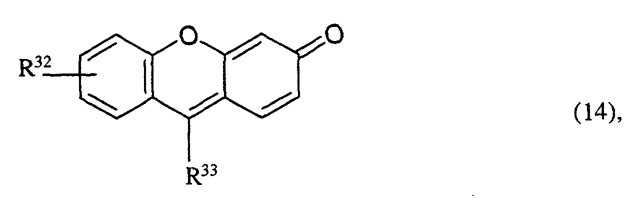 des 9,10-diphénylanthracènes de formule (15) 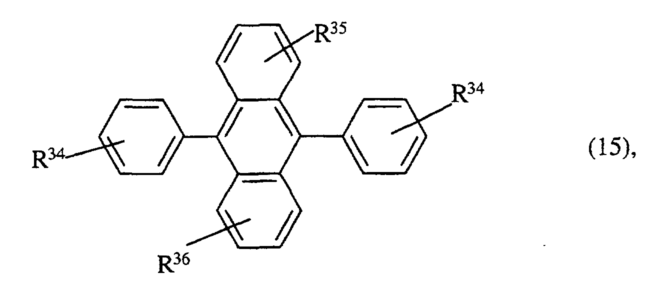 des 2-styrylbenzazoles de formule (16) 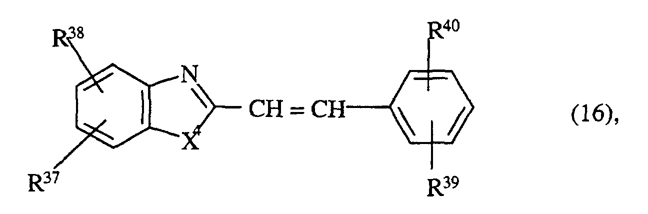 dans laquelle X⁴ = O, S, Se ou CH₂,
les symboles de ces formules ayant les significations suivantes :
R⁴ représente l'hydrogène, un groupe alkyle en C₁-C₃₀, aryle en C₆-C₁₈, aralkyle en C₇-C₃₄ ou alcoxy en C₁-C₃₀, ou un groupe 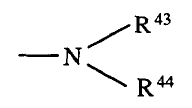 dans lequel
R⁴³ et R⁴⁴ représentent chacun, indépendamment l'un de l'autre, l'hydrogène, un groupe alkyle en C₁-C₃₀, aryle en C₆-C₁₈, aralkyle en C₇-C₂₄,
chacun d'eux pouvant porter des substituants hydroxy ou (alcoxy en C₁-C₄)carbonyle, ou bien
R⁴³ et R⁴⁴ forment ensemble et avec l'atome d'azote auquel ils sont fixés un cycle morpholine, pipéridine, pyrrolidine ou pipérazine, chacun d'eux pouvant porter un ou deux substituants choisis parmi les groupe méthyle, éthyle et phényle,
R⁵ représente l'hydrogène, un groupe cyano, alkyle en C₁-C₃₀, aryle en C₆-C₁₈, aralkyle en C₇-C₃₄, alcoxy en C₁-C₃₀, acyle en C₂-C₁₂, (alcoxy en C₁-C₁₂)carbonyle, (di)(alkyle en C₁-C₁₂)aminocarbonyle,
R⁶ représente l'hydrogène, un groupe cyano, alkyle en C₁-C₃₀, aryle en C₆-C₁₈, aralkyle en C₇-C₃₄, alcoxy en C₁-C₃₀ ou un groupe 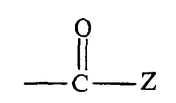 dans lequel Z représente un groupe OR⁴⁵ ou un groupe 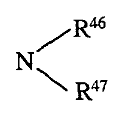 et
R⁴⁵, R⁴⁶ et R⁴⁷ représentent chacun, indépendamment les uns des autres, un groupe alkyle en C₁-C₃₀, aryle en C₆-C₁₈ ou aralkyle en C₇-C₂₄, les cycles aromatiques pouvant encore porter des substituants halogéno, alkyle en C₁-C₆, alcoxy en C₁-C₆,
R⁷, R⁸ et R⁹ représentent chacun, indépendamment les uns des autres, l'hydrogène, un groupe alkyle en C₁-C₃₀, aryle en C₆-C₁₈ ou aralkyle en C₇-C₂₄, alcoxy en C₁-C₃₀, cyano, alcoxycarbonyle en C₂-C₁₂, (di)(alkyle en C₁-C₁₂)aminocarbonyle ou un groupe amino portant un ou deux groupes alkyle en C₁-C₆,
R¹⁰ représente l'hydrogène, un groupe cyano, alkyle en C₁-C₃₀, aryle en C₆-C₁₈, aralkyle en C₇-C₃₄, alcoxy en C₁-C₃₀, amino, un groupe amino portant un ou deux groupes alkyle en C₁-C₆, un groupe acyle en C₂-C₁₂, (alcoxy en C₁-C₁₂)carbonyle, (di)(alkyle en C₁-C₁₂)aminocarbonyle,
R¹¹ représente l'hydrogène, un halogène, un groupe nitro, (alcoxy en C₁-C₄)carbonyle, acyle en C₁-C₄, aralcényle en C₈-C₂₄, un groupe amino non substitué ou un groupe amino portant un ou deux substituants identiques ou différents choisis parmi les groupes alkyle en C₁-C₃₀, aryle en C₆-C₁₈ ou aralkyle en C₇-C₂₄,
R¹¹ peut encore représenter un cycle morpholinyle, pipéridinyle, pyrrolidinyle ou pipérazinyle qui peut porter un ou deux substituants choisis parmi les groupes méthyle, éthyle et/ou phényle,
R¹² représente l'hydrogène, un groupe alkyle en C₁-C₃₀, aryle en C₆-C₁₈, aralkyle en C₇-C₂₄ ou alcoxy en C₁-C₃₀,
R¹³ représente l'hydrogène, un groupe alkyle en C₁-C₃₀, aryle en C₆-C₁₈, aralkyle en C₇-C₃₄, alcoxy en C₁-C₃₀, ou 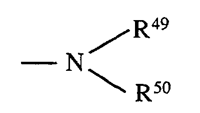 dans lequel
R⁴⁹ et R⁵⁰ représentent chacun, indépendamment l'un de l'autre, un groupe alkyle en C₁-C₃₀, aryle en C₆-C₁₈, aralkyle en C₇-C₂₄, ou bien
R⁴⁹ et R⁵⁰ peuvent également former ensemble et avec l'atome d'azote auquel ils sont reliés un cycle morpholinyle, pipéridinyle, pyrrolidinyle ou pipérazinyle, lequel peut porter un ou deux substituants identiques ou différents choisis parmi les groupes méthyle, éthyle et phényle,
R¹⁴ et R¹⁵ représentent chacun, indépendamment l'un de l'autre, l'hydrogène, un groupe cyano, un halogène, un groupe nitro, alkyle en C₁-C₃₀, alcoxy en C₁-C₃₀, aryle en C₆-C₁₈ ou aralkyle en C₇-C₂₄, (alcoxy en C₁-C₁₂)carbonyle, acyle en C₂-C₁₂, (di)(alkyle en C₁-C₁₂)aminocarbonyle, (di)(alkyle en C₁-C₆)amino,
R¹⁷ et R²³ représentent l'hydrogène, des groupes alkyle en C₁-C₃₀, aryle en C₆-C₁₈ ou aralkyle en C₇-C₂₄, et
R¹⁶, R¹⁸ à R²² et R²⁴ à R⁴⁰ représentent chacun, indépendamment les uns des autres, l'hydrogène, un groupe cyano, alkyle en C₁-C₃₀, aryle en C₆-C₁₈, aralkyle en C₇-C₂₄, alcoxy en C₁-C₃₀, un groupe amino portant un ou deux groupes alkyle en C₁-C₆, un groupe amino non substitué, un groupe acyle en C₂-C₁₂, (alcoxy en C₁-C₁₂)carbonyle, ou (di)(alkyle en C₁-C₁₂)aminocarbonyle, les chaînes carbonées aliphatiques, par exemple les chaînes alkyle, alcoxy, alkylamino, aralkyle, des radicaux R⁴ à R¹³, R¹⁶ à R⁴⁰, pouvant être interrompues par un ou plusieurs, de préférence par un ou deux hétéroatomes choisis parmi l'azote, l'oxygène et le soufre et/ou par un ou plusieurs, de préférence par un ou deux cycles phénylène, lesquels peuvent être substitués par des groupes alkyle en C₁-C₄ et/ou des halogènes,
et dans lesquels en outre, la liaison du luminophore aux chaînes latérales du polymère est réalisée par l'intermédiaire d'un atome d'oxygène d'un groupe hydroxy des substituants mentionnés ci-dessus.

2. (Co)polymères selon la revendication 1, dans lesquels la proportion des motifs de structure de formules (1) et/ou (2) va de 0,5 à 60 mol% et le cas échéant celle des motifs de formule (3) de 40 à 99,5 mol%.

3. (Co)polymères selon la revendication 1, pour lesquels L représente un colorant fluorescent choisi dans le groupe des coumarines de formule (4), des pyrènes de formule (5) des 1,8-naphtalimides de formule (6), des 1,8-naphtaloylène-1',2'-benzimidazoles de formule (7), des phénothiazines ou des phénoxazines de formule (8), des carbazoles et fluorènes de formule (10).

4. Procédé de préparation des (co)polymères de formule (1) selon la revendication 1, selon lequel on prépare des monomères de formule (20) ou (21) 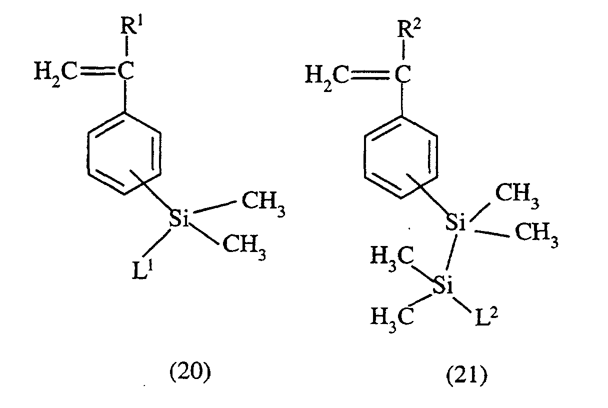 à partir d'un colorant fluorescent fonctionnalisé par un groupe OH, COOH ou NH, et qui contient la structure de L,
et d'un dérivé du styrène ou de l'acide acrylique de formule (22) ou (23) 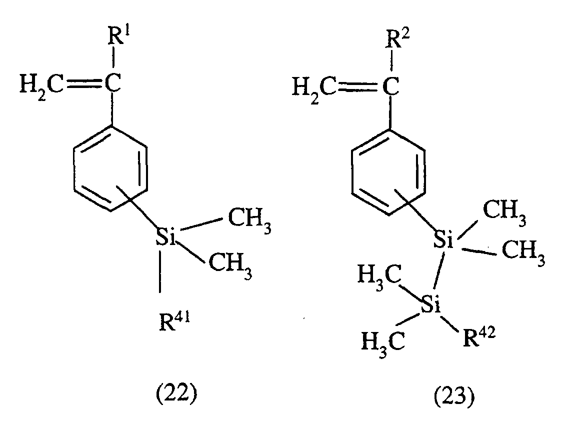 dans lesquelles
R¹ et R² ont les significations indiquées ci-dessus,
R⁴¹ et R⁴² représentent des halogènes,
en présence d'une base, puis on polymérise ces monomères, le cas échéant en présence de comonomères des motifs de structure de formule (3).

5. Utilisation des (co)polymères de formule (1) de la revendication 1, pour la formation de dispositifs électroluminescents.

6. Dispositif électroluminescent contenant en tant que substance électroluminescente un (co)polymère selon la revendication 1.

7. Dispositif électroluminescent selon la revendication 6, contenant deux électrodes entre lesquelles il y a une couche électroluminescente constituée des (co)polymères, avec le cas échéant une ou plusieurs couches intermédiaires entre la couche électroluminescente et les électrodes.
